# EUROPEAN PATENT APPLICATION

(11) **EP 4 726 500 A1**
(43) Date of publication of application: **15.04.2026**
(21) Application number: 25753386.9
(22) Date of filing: 18.07.2025
(51) Int. Cl.: G06F 1/16, H05K 9/00

(54) **ELECTRONIC DEVICE COMPRISING STRUCTURE FOR SIGNAL TRANSMISSION AND SUPPORT OF FLEXIBLE DISPLAY**

(30) Priority: 16.08.2024 KR 20240109923; 13.09.2024 KR 20240126234
(71) Applicant: Samsung Electronics Co., Ltd, Suwon-si, Gyeonggi-do 16677 (KR)
(72) Inventor: LEE, Youngsun, Suwon-si, Gyeonggi-do 16677 (KR); KIM, Hyunmuk, Suwon-si, Gyeonggi-do 16677 (KR); PARK, Sungwon, Suwon-si, Gyeonggi-do 16677 (KR); AHN, Jinsook, Suwon-si, Gyeonggi-do 16677 (KR); YU, Yuji, Suwon-si, Gyeonggi-do 16677 (KR); YOON, Shinhyuk, Suwon-si, Gyeonggi-do 16677 (KR); YUN, Yongbeen, Suwon-si, Gyeonggi-do 16677 (KR); CHUNG, Yeonkyung, Suwon-si, Gyeonggi-do 16677 (KR); CHO, Sujin, Suwon-si, Gyeonggi-do 16677 (KR)
(74) Representative: HGF
(86) International application number: PCT/KR2025/010658
(87) International publication number: WO 2026/038737

(57) **Abstract**

A foldable electronic device comprises a flexible display including: a first display portion, a second display portion, and a third display portion, configured to be bent when the foldable electronic device is in a folded state, extending from the first display portion to the second display portion; printed circuit board, PCB, configured to support the flexible display, the PCB including: a first portion corresponding to the first display portion, a second portion corresponding to the second display portion, a third portion corresponding to the third display portion, wherein a plurality of holes are formed in a region of the third portion, and an electrical wire configured to extend from the first portion of the PCB to the second portion of the PCB via the third portion of the PCB such that the electrical wire passes in-between a first number of the plurality of holes; and a conductive material disposed on inner surfaces of the plurality of holes and electrically isolated from the electrical wire.

## Description

### [Technical Field]

The present disclosure relates to an electronic device including a structure for signal transmission and support of a flexible display.

### [Background Art]

As a demand of a user is diversified, a display for displaying content may include a deformable structure. For example, an electronic device may include a foldable flexible display. The electronic devices may require a supporting structure or a buffer structure for the flexible display for reducing damage to the deformable flexible display. In addition, the electronic device may require a structure to transmit a high-speed signal and/or a high-power signal using the supporting structure of the flexible display.

The above-described information may be provided as a related art for the purpose of helping understanding of the present disclosure. No claim or determination is raised as to whether any of the above-described descriptions may be applied as a prior art related to the present disclosure.

### [Disclosure]

### [Technical Solution]

A foldable electronic device is disclosed. A foldable electronic device may comprise a flexible display including: a first display portion, a second display portion, and a third display portion, configured to be bent when the foldable electronic device is in a folded state, extending from the first display portion to the second display portion; printed circuit board, PCB, configured to support the flexible display, the PCB including: a first portion corresponding to the first display portion, a second portion corresponding to the second display portion, a third portion corresponding to the third display portion, wherein a plurality of holes are formed in a region of the third portion, and an electrical wire configured to extend from the first portion of the PCB to the second portion of the PCB via the third portion of the PCB such that the electrical wire passes in-between a first number of the plurality of holes; and a conductive material disposed on inner surfaces of the plurality of holes and electrically isolated from the electrical wire.

A foldable electronic device is disclosed. The foldable electronic device may comprise a flexible display including a first display portion, a second display portion, and a third display portion, configured to be bent when the foldable electronic device is in a folded state, extending from the first display portion to the second display portion. The foldable electronic device may comprise a printed circuit board (PCB), supporting the flexible display, including a first portion corresponding to the first display portion, a second portion corresponding to the second display portion, a third portion, corresponding to the third display portion, including surfaces defining holes, and an electrical wire, extending from the first portion to the second portion, across the third portion of the PCB by detouring closely around at least some of the holes. The foldable electronic device may include a conductive material, plated on the surfaces of the third portion of the PCB, electrically isolated from the electrical wire.

An electronic device is disclosed. The electronic device may comprise a flexible display including a deformable portion configured to be bent, a PCB, supporting the flexible display, including holes disposed under the display portion of the flexible display, a conductive line, disposed in the PCB, at least partially detouring closely around at least some of the holes, a conductive material plated on an inner surface of each hole of the holes, and a conductive ink material, filled in the holes together with the conductive material, attached to the conductive material.

### [Description of the Drawings]

FIG. 1 is a block diagram of an electronic device in a network environment according to various embodiments.
FIG. 2A illustrates an unfolded state of an exemplary electronic device.
FIG. 2B illustrates a folded state of an exemplary electronic device.
FIG. 2C is an exploded view of an exemplary electronic device.
FIG. 3A illustrates an unfolded state of an exemplary electronic device.
FIG. 3B illustrates a folded state of an exemplary electronic device.
FIG. 4 is a cross-sectional view of an exemplary electronic device cut along line A-A' of FIG. 2A.
FIG. 5A is a top plan view of a substrate of an exemplary electronic device.
FIG. 5B is a cross-sectional view of a substrate of an exemplary electronic device cut along line B-B' of FIG. 5A.
FIG. 5C is a cross-sectional view of a substrate of an exemplary electronic device cut along line C-C' of FIG. 5A.
FIG. 6 illustrates a portion of a substrate of an exemplary electronic device.
FIGS. 7A and 7B are cross-sectional views of a substrate of an exemplary electronic device cut along line D-D' of FIG. 6.
FIG. 8 is a graph indicating resistance of a conductive ink material according to a state of an exemplary electronic device.
FIG. 9A illustrates an exemplary electronic device in a first state.
FIG. 9B illustrates an exemplary electronic device in a second state.
FIG. 9C is a top plan view of an exemplary electronic device in a first state from which a flexible display is removed.
FIG. 9D is a rear view of an exemplary electronic device in a first state from which a rear cover is removed.
FIG. 9E is a top plan view of a substrate disposed in the exemplary electronic device of FIGS. 9A to 9D.
FIG. 10A is a top plan view of an electronic device in a retracted state.
FIG. 10B is a bottom view of an exemplary electronic device in a retracted state.
FIG. 10C is a top plan view of an electronic device in an extended state.
FIG. 10D is a bottom view of an exemplary electronic device in an extended state.

### [Mode for Invention]

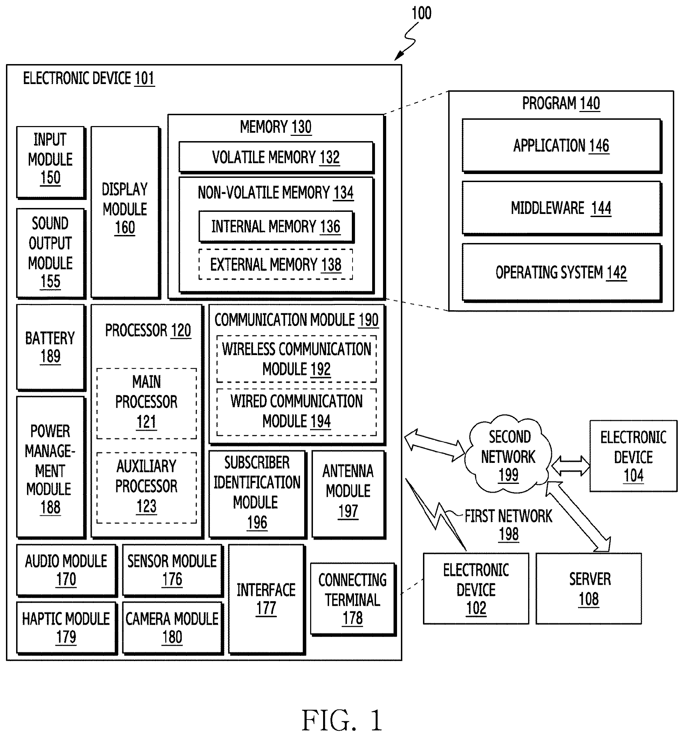

FIG. 1 is a block diagram illustrating an electronic device 101 in a network environment 100 according to various embodiments.

Referring to FIG. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module(SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to an embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, an HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to an embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth^{™}, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, an RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

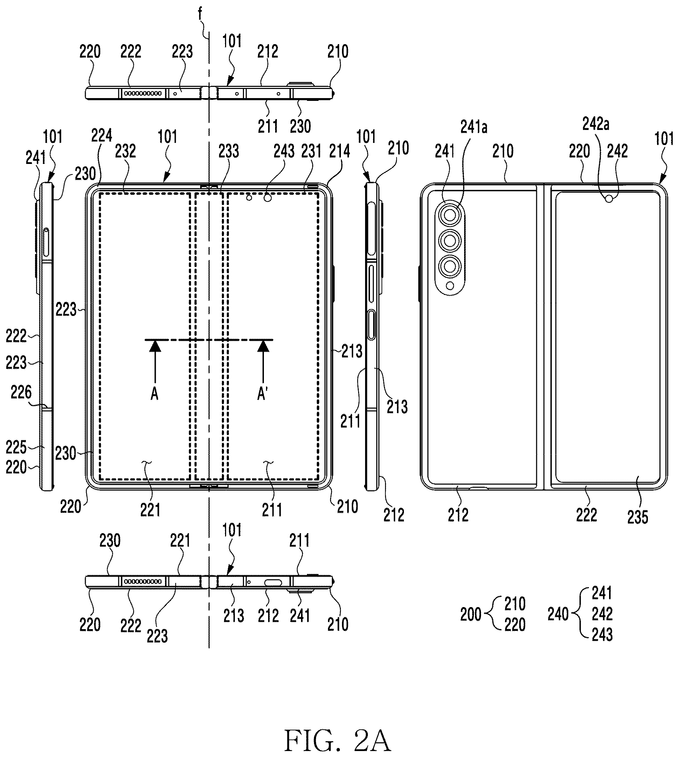

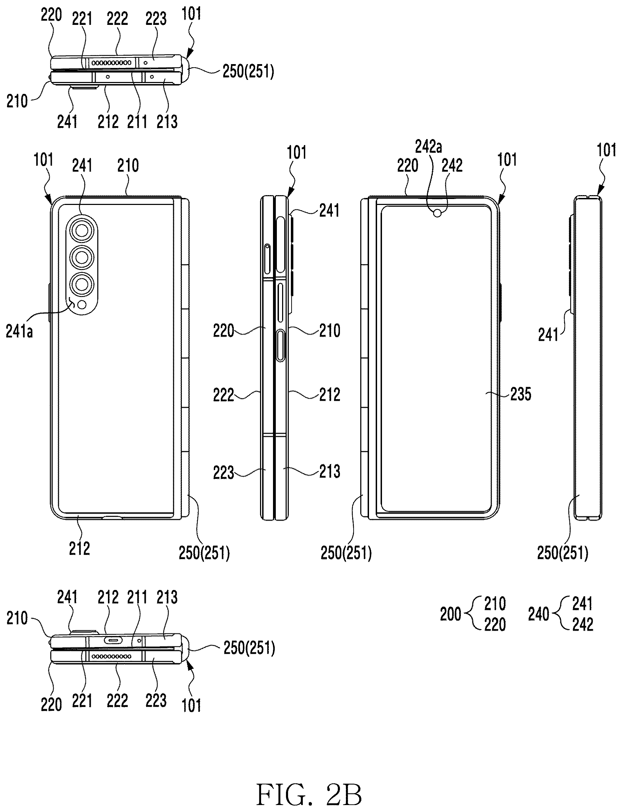

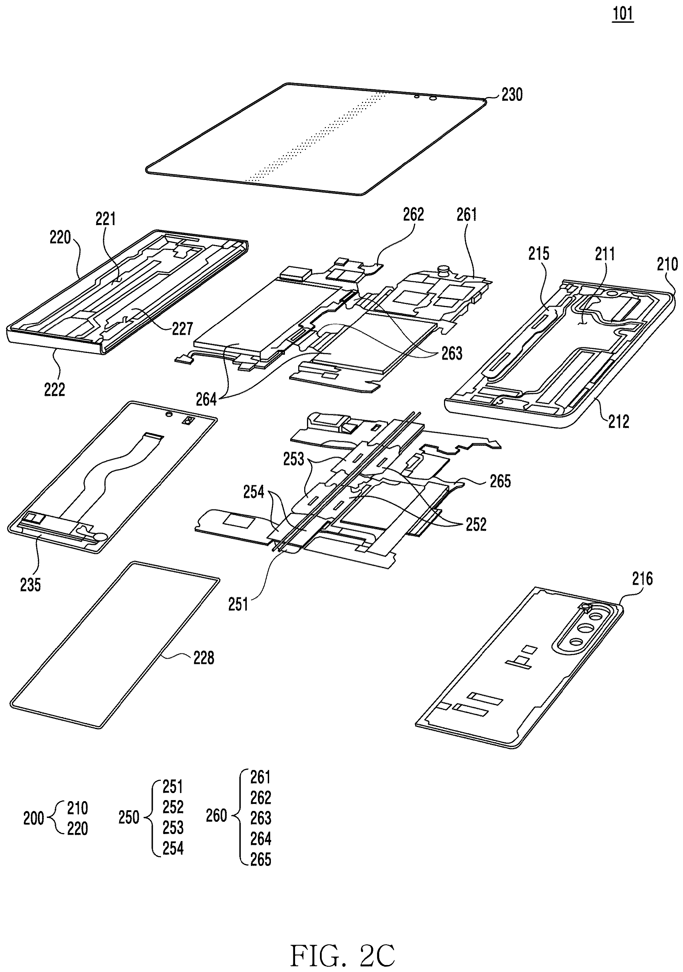

FIG. 2A illustrates an unfolded state of an exemplary electronic device. FIG. 2B illustrates a folded state of an exemplary electronic device. FIG. 2C is an exploded view of an exemplary electronic device.

Referring to FIGS. 2A, 2B, and 2C, an electronic device 101 may include a housing 200 including a first housing part 210 and a second housing part 220, a display 230, at least one camera 240 (e.g., the camera module 180 of FIG. 1), a hinge structure 250, and/or at least one electronic component 260.

The first housing part 210 and the second housing part 220 may form at least a portion of an outer surface of the electronic device 101 that may be gripped by a user. The at least a portion of the outer surface of the electronic device 101 defined by the first housing part 210 and the second housing part 220 may contact a part of a body of the user when the electronic device 101 is used by the user. According to an embodiment, the first housing part 210 may include a first front side 211, a first rear side 212 facing the first front side 211 and being spaced apart from the first front side 211, and first side surfaces 213 surrounding at least a portion of the first front side 211 and the first rear side 212. The first side surfaces 213 may connect a periphery of the first front side 211 to a periphery of the first rear side 212. The first front side 211, the first rear side 212, and the first side surfaces 213 may define an inner space of the first housing part 210. According to an embodiment, the first housing part 210 may provide a space formed by the first front side 211, the first rear side 212, and the first side surfaces 213 as a space for disposing components of the electronic device 101.

The second housing part 220 may include a second front side 221, a second rear side 222 facing the second front side 221 and being spaced apart from the second front side 221, and second side surfaces 223 surrounding at least a portion of the second front side 221 and the second rear side 222. The second side surfaces 223 may connect a periphery of the second front side 221 to a periphery of the second rear side 222. The second front side 221, the second rear side 222, and the second side surfaces 223 may define an inner space of the second housing part 220. According to an embodiment, the second housing part 220 may provide a space formed by the second front side 221, the second rear side 222, and the second side surfaces 223 surrounding at least a portion of the second front side 221 and the second rear side 222 as a space for mounting the components of the electronic device 101. According to an embodiment, the second housing part 220 may be coupled to the first housing part 210 to be rotatable with respect to the first housing part 210.

Each of the first housing part 210 and the second housing part 220 may include a first protective member 214 and a second protective member 224, respectively. The first protective member 214 and the second protective member 224 may be disposed on the first front side 211 and the second front side 221 along a periphery of the display 230. According to an embodiment, the first protective member 214 and the second protective member 224 may prevent inflow of a foreign substance (e.g., dust or moisture) through a gap between the display 230, the first housing part 210, and the second housing part 220. For example, the first protective member 214 may surround a periphery of a first planar portion 231 of the display 230, and the second protective member 224 may surround a periphery of a second planar portion 232 of the display 230. The first protective member 214 may be formed by being attached to the first side surfaces 213 of the first housing part 210, or may be formed integrally with the first side surfaces 213. The second protective member 224 may be formed by being attached to the second side surfaces 223 of the second housing part 220, or may be formed integrally with the second side surfaces 223.

The first side surfaces 213 and the second side surfaces 223 may include a conductive material, a non-conductive material, or a combination thereof. For example, the second side surfaces 223 may include at least one conductive portion 225 and at least one non-conductive portion 226. The at least one conductive portion 225 may include a plurality of conductive portions spaced apart from each other. The at least one non-conductive portion 226 may be disposed between a plurality of conductive portions. The plurality of conductive portions may be disconnected from each other by the at least one non-conductive portion 226 disposed between the plurality of conductive portions. According to an embodiment, the plurality of conductive portions and a plurality of non-conductive portions may form an antenna radiator together. The electronic device 101 may communicate with an external electronic device through the antenna radiator formed by the plurality of conductive portions and the plurality of non-conductive portions.

The display 230 may be configured to display visual information. According to an embodiment, the display 230 may be disposed on the first front side 211 of the first housing part 210 and the second front side 221 of the second housing part 220 across the hinge structure 250. For example, the display 230 may include the first planar portion 231 disposed on the first front side 211 of the first housing, the second planar portion 232 disposed on the second front side 221 of the second housing, and a foldable portion 233 disposed between the first planar portion 231 and the second planar portion 232. The first planar portion 231, the second planar portion 232, and the foldable portion 233 may form a front side of the display 230. According to an embodiment, the display 230 may further include a sub-display 235 disposed on the second rear side 222 of the second housing part 220. For example, the display 230 may be referred to as a flexible display. According to an embodiment, the display 230 may include a window exposed toward the outside of the electronic device 101. The window may protect a surface of the display 230 and transmit visual information provided by the display 230 to the outside of the electronic device 101 by including a substantially transparent material. For example, the window may include glass (e.g., ultra-thin glass (UTG)) and/or a polymer (e.g., polyimide (PI)), but it is not limited thereto. In the disclosure, each of the first planar portion 231, the second planar portion 232, and the foldable portion 233 corresponds to a display portion. For example, the first planar portion 231 may correspond to a first display portion, the second planar portion 232 may correspond to a second display portion, and the foldable portion 233 may correspond to a third display portion.

The at least one camera 240 may be configured to obtain an image based on receiving light from an external subject of the electronic device 101. According to an embodiment, the at least one camera 240 may include first cameras 241, a second camera 242, and/or a third camera 243. The first cameras 241 may be disposed in the first housing part 210. For example, the first cameras 241 are disposed inside the first housing part 210, and at least a partially be visible through the first rear side 212 of the first housing part 210. The first cameras 241 may be supported by a bracket (not illustrated) in the first housing part 210. The first housing part 210 may include at least one opening 241a overlapping the first cameras 241 when the first rear side 212 is viewed from above. The first cameras 241 may obtain an image based on receiving light from the outside of the electronic device 101 through the at least one opening 241a.

The second camera 242 may be disposed in the second housing part 220. For example, the second camera 242 may be disposed inside the second housing part 220 and may be visible through the sub-display 235. The second housing part 220 may include at least one opening 242a overlapping the second camera 242 when the second rear side 222 is viewed from above. The second camera 242 may obtain an image based on receiving the light from the outside of the electronic device 101 through the at least one opening 242a.

The third camera 243 may be disposed in the first housing part 210. For example, the third camera 243 may be disposed inside the first housing part 210, and at least partially be visible through the first front side 211 of the first housing part 210. For another example, the third camera 243 is disposed inside the first housing part 210, and at least partially visible through the first planar portion 231 of the display 230. The first planar portion 231 of the display 230 may include at least one opening (not illustrated) overlapping the third camera 243 when the display 230 is viewed from above. The third camera 243 may obtain an image based on receiving the light from the outside of the display 230 through the at least one opening.

The second camera 242 and the third camera 243 may be disposed under the display 230 (e.g., in a direction facing the inside of the first housing part 210 or the inside of the second housing part 220). For example, the second camera 242 and the third camera 243 may be under display cameras (UDCs). When the second camera 242 and the third camera 243 are under-display cameras, an area of the display 230 corresponding to positions of each of the second camera 242 and the third camera 243 may not be an inactive area. For example, when the second camera 242 and the third camera 243 are under-display cameras, the area of the display 230 corresponding to the positions of each of the second camera 242 and the third camera 243 may have pixel density lower than pixel density of another area of the display 230. The inactive area of the display 230 may mean an area of the display 230 that does not include a pixel or does not emit light to the outside of the electronic device 101. For another example, the second camera 242 and the third camera 243 may be punch hole cameras. When the second camera 242 and the third camera 243 are punch hole cameras, an area of the display 230 corresponding to the positions of each of the second camera 242 and the third camera 243 may be the inactive area. For example, when the second camera 242 and the third camera 243 are punch-hole cameras, the area of the display 230 corresponding to the positions of each of the second camera 242 and the third camera 243 may include an opening that does not include a pixel.

The hinge structure 250 may rotatably connect the first housing part 210 and the second housing part 220. The hinge structure 250 may be disposed between the first housing part 210 and the second housing part 220 of the electronic device 101 such that the electronic device 101 may be bent, curved, or folded. For example, the hinge structure 250 may be disposed between a portion of the first side surfaces 213 and a portion of the second side surfaces 223 facing each other. The hinge structure 250 may change the electronic device 101 into an unfolded state in which directions that the first front side 211 of the first housing part 210 and the second front side 221 of the second housing part 220 face are substantially the same, or a folded state in which the first front side 211 and the second front side 221 face each other. When the electronic device 101 is in a folded state, the first housing part 210 and the second housing part 220 may be stacked or overlapped by facing each other.

When the electronic device 101 is in the folded state, a direction in which the first front side 211 faces and a direction in which the second front side 221 faces may be different from each other. For example, when the electronic device 101 is in the folded state, the direction in which the first front side 211 faces and the direction in which the second front side 221 faces may be opposite to each other. For another example, when the electronic device 101 is in the folded state, the direction in which the first front side 211 faces and the direction in which the second front side 221 faces may be inclined with respect to each other. In case that the direction in which the first front side 211 faces is inclined with respect to the direction in which the second front side 221 faces, the first housing part 210 may be inclined with respect to the second housing part 220. However, it is not limited thereto. For example, in the folded state of the electronic device 101, the first rear side 212 of the first housing part 210 may face the second rear side 222 of the second housing part 220. In case that the first rear side 212 and the second rear side 222 face each other in the folded state of the electronic device 101, the direction in which the first front side 211 faces and the direction in which the second front side 221 faces may be opposite to each other. In case that the first rear side 212 and the second rear side 222 face each other in the folded state of the electronic device 101, the display 230 may be directly exposed to the outside in the folded state of the electronic device 101.

The electronic device 101 may be foldable with respect to a folding axis f. The folding axis f may mean a virtual line extending over the hinge cover 251 in a direction substantially parallel to a longitudinal direction of the electronic device 101, but it is not limited thereto. For example, the folding axis f may be a virtual line extending in a direction substantially perpendicular to the longitudinal direction of the electronic device 101. In case that the folding axis f extends in the direction substantially perpendicular to the longitudinal direction of the electronic device 101, the hinge structure 250 may connect the first housing part 210 and the second housing part 220 by extending in a direction parallel to the folding axis f. The first housing part 210 and the second housing part 220 may be rotatable by the hinge structure 250 extending in the direction substantially perpendicular to the longitudinal direction of the electronic device 101.

The hinge structure 250 may include a hinge cover 251, a first hinge plate 252, a second hinge plate 253, and a hinge module 254. The hinge cover 251 may surround internal components of the hinge structure 250 and form an outer surface of the hinge structure 250. According to an embodiment, when the electronic device 101 is in the folded state, at least a portion of the hinge cover 251 surrounding the hinge structure 250 may be exposed to the outside of the electronic device 101 through a space between the first housing part 210 and the second housing part 220. According to an embodiment, when the electronic device 101 is in a unfolded state, the hinge cover 251 may be covered by the first housing part 210 and the second housing part 220 and may not be exposed to the outside of the electronic device 101.

The first hinge plate 252 and the second hinge plate 253 may rotatably connect the first housing part 210 and the second housing part 220 by being respectively coupled to the first housing part 210 and the second housing part 220. For example, the first hinge plate 252 may be coupled to a first bracket 215 of the first housing part 210, and the second hinge plate 253 may be coupled to a second bracket 227 of the second housing part 220. As the first hinge plate 252 and the second hinge plate 253 are respectively coupled to the first bracket 215 and the second bracket 227, the first housing part 210 and the second housing part 220 may be rotatable according to rotation of the first hinge plate 252 and the second hinge plate 253.

The hinge module 254 may rotate the first hinge plate 252 and the second hinge plate 253. For example, the hinge module 254 may rotate the first hinge plate 252 and the second hinge plate 253 based on the folding axis f, by including gears that are rotatable by being engaged with each other. According to an embodiment, the hinge modules 254 may be plural. For example, a plurality of hinge modules 254 may be respectively disposed by being spaced apart from each other at both ends of the first hinge plate 252 and the second hinge plate 253.

The first housing part 210 may include the first bracket 215 and a first cover 216, and the second housing part 220 may include the second bracket 227 and a second cover 228. The first bracket 215 and the first cover 216 may support the components of the electronic device 101. The first bracket 215 may define the first housing part 210 by being coupled to the first cover 216. The first cover 216 may define a portion of an outer surface of the first housing part 210. The second bracket 227 and the second cover 228 may support the components of the electronic device 101. The second bracket 227 may define the second housing part 220 by being coupled to the second cover 228. The second cover 228 may define a portion of an outer surface of the second housing part 220. For example, the display 230 may be disposed on a surface of the first bracket 215 and a surface of the second bracket 227. The first cover 216 may be disposed on another surface of the first bracket 215 opposite to the surface of the first bracket 215. The second cover 228 may be disposed on another surface of the second bracket 227 opposite to the surface of the second bracket 227. The sub-display 235 may be disposed between the second bracket 227 and the second cover 228.

A portion of the first bracket 215 may be surrounded by the first side surfaces 213, and a portion of the second bracket 227 may be surrounded by the second side surfaces 223. For example, the first bracket 215 may be integrally formed with the first side surfaces 213, and the second bracket 227 may be integrally formed with the second side surfaces 223. For another example, the first bracket 215 may be formed separately from the first side surfaces 213, and the second bracket 227 may be formed separately from the second side surfaces 223.

The at least one electronic component 260 may implement various functions for providing to the user. According to an embodiment, the at least one electronic component 260 may include a first printed circuit board 261, a second printed circuit board 262, a flexible printed circuit board 263, a battery 264 (e.g., the battery 189 of FIG. 1), and/or an antenna 265 (e.g., the antenna module 197 of FIG. 1). The first printed circuit board 261 and the second printed circuit board 262 may respectively form an electrical connection of the components in the electronic device 101. For example, components (e.g., the processor 120 of FIG. 1) for implementing an overall function of the electronic device 101 may be disposed on the first printed circuit board 261, and at least one electronic component for implementing a portion of functions of the first printed circuit board 261 may be disposed on the second printed circuit board 262. For another example, components for operating the sub-display 235 disposed on the second rear side 222 may be disposed on the second printed circuit board 262.

The first printed circuit board 261 may be disposed in the first housing part 210. For example, the first printed circuit board 261 may be disposed on a surface of the first bracket 215. According to an embodiment, the second printed circuit board 262 may be disposed in the second housing part 220. The second printed circuit board 262 may be spaced apart from the first printed circuit board 261 and may be disposed on a surface of the second bracket 227. The flexible printed circuit board 263 may connect the first printed circuit board 261 and the second printed circuit board 262. For example, the flexible printed circuit board 263 may extend from the first printed circuit board 261 to the second printed circuit board 262.

The battery 264, which is a device for supplying power to at least one component of the electronic device 101, may include, for example, a non-rechargeable primary battery, a rechargeable secondary battery, or a fuel cell. At least a portion of the battery 264 may be disposed on substantially the same plane as the first printed circuit board 261 or the second printed circuit board 262.

The antenna 265 may be configured to receive power or a signal from the outside of the electronic device 101. According to an embodiment, the antenna 265 may be disposed between the first cover 216 and the battery 264. The antenna 265 may include, for example, a near field communication (NFC) antenna, an antenna module, and/or a magnetic secure transmission (MST) antenna. The antenna 265 may perform, for example, short-range communication with an external device or wirelessly transmit and receive power required for charging.

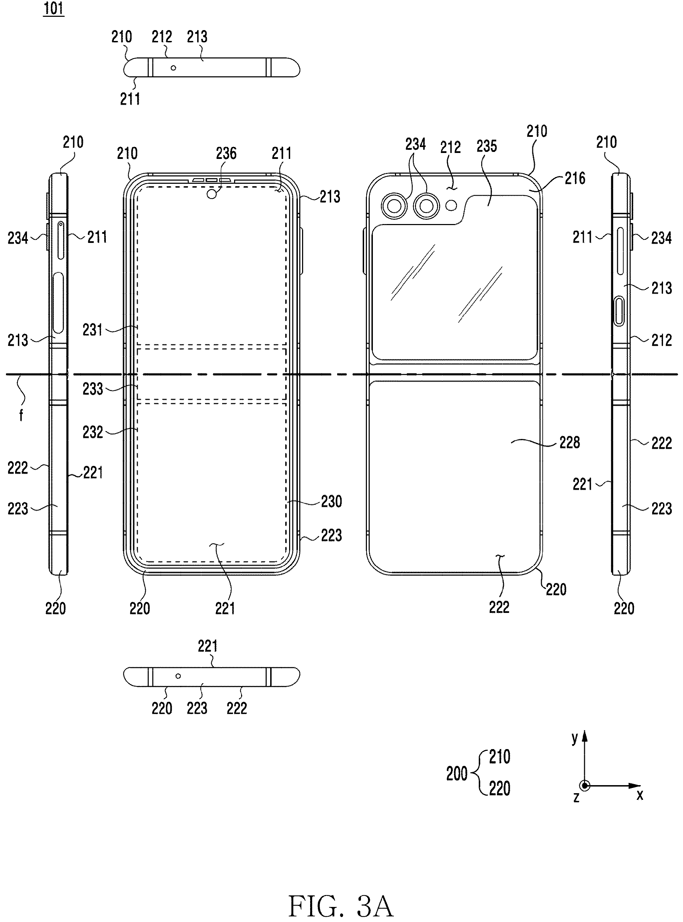

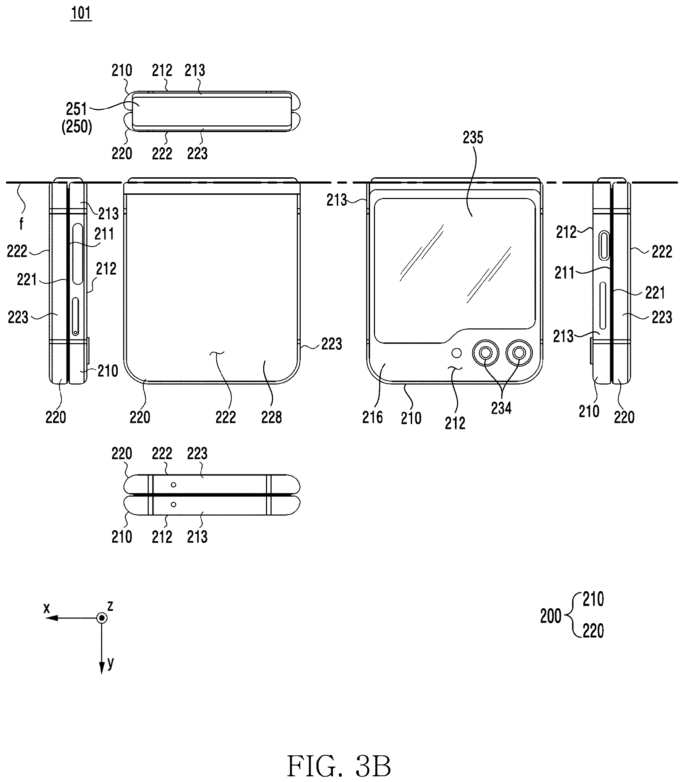

FIG. 3A illustrates an unfolded state of an exemplary electronic device. FIG. 3B illustrates a folded state of an exemplary electronic device.

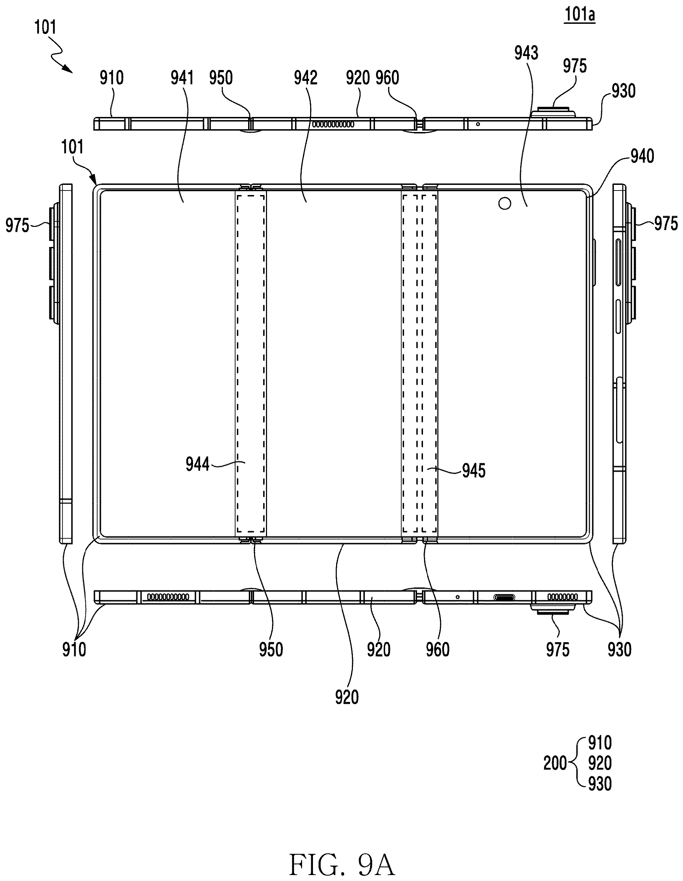

An electronic device 101 exemplarily illustrated and described in FIGS. 3A and 3B may include a housing 200 including a first housing part 210 and a second housing part 220 rotatable with respect to the first housing part 210, such as the electronic device 101 exemplarily illustrated and described in FIGS. 2A to 2C. The electronic device 101 exemplarily illustrated and described in FIGS. 3A and 3B may be referred to as a foldable electronic device in terms of including a display 230 including a foldable portion 233 that is deformable by a hinge structure 250 (or an hinge assembly) configured to rotate the second housing part 220 with respect to the first housing part 210, such as the electronic device 101 exemplarily illustrated and described in FIGS. 2A to 2C. For example, a folding axis f of the electronic device 101 exemplarily illustrated and described in FIGS. 3A and 3B may be parallel to an x-axis, as illustrated. Unlike the electronic device 101 exemplarily illustrated and described in FIGS. 3A and 3B, the folding axis f of the electronic device 101 exemplarily illustrated and described in FIGS. 2A to 2C may be parallel to a y-axis orthogonal to the x-axis. However, the electronic device 101 illustrated and described in FIGS. 2A to 3B is exemplary, and the electronic device 101 may have various foldable form factors (e.g., a multi-foldable electronic device illustrated in FIGS. 9A to 9D). Hereinafter, the electronic device 101 exemplarily illustrated in FIGS. 3A and 3B will be described with reference to the description of configurations having the same reference numerals of FIGS. 2A to 2C.

The electronic device 101 may include the housing 200 including the first housing part 210 and the second housing part 220, and the hinge structure 250 (or the hinge assembly). The first housing part 210 may be rotatably connected to the hinge structure 250. The first housing part 210 may rotate with respect to the second housing part 220 through the hinge structure 250. The second housing part 220 may be rotatably connected to the hinge structure 250. The second housing part 220 may rotate with respect to the first housing part 210 through the hinge structure 250.

The first housing part 210 may include a first front side 211, a first rear side 212 faced away from the first front side 211, and first side surfaces 213 surrounding at least a portion of the first front side 211 and the first rear side 212. The first housing part 210 may provide a space for disposing components of the electronic device 101. The first housing part 210 may include a conductive material, a non-conductive material, or a combination thereof.

The second housing part 220 may include a second front side 221, a second rear side 222 faced away from the second front side 221, and second side surfaces 223 surrounding at least a portion of the second front side 221 and the second rear side 222. The second housing part 220 may provide a space for disposing the components of the electronic device 101.

The hinge structure 250 may be connected to the first housing part 210 and the second housing part 220, respectively. For example, the hinge structure 250 may include a first hinge plate (e.g., the first hinge plate 252 of FIG. 2C) and a second hinge plate (e.g., the second hinge plate 253 of FIG. 2C) that are configured to be rotatable. The first hinge plate may be connected to the first housing part 210, and the first housing part 210 may be rotated by the first hinge plate. The second hinge plate may be connected to the second housing part 220, and the second housing part 220 may be rotated by the second hinge plate.

The electronic device 101 may be folded or unfolded with respect to the folding axis f passing through the hinge structure 250 according to rotation of the first housing part 210 and the second housing part 220. The hinge structure 250 may be positioned between the first housing part 210 and the second housing part 220 such that the electronic device 101 may be folded with respect to the folding axis f.

The hinge structure 250 may include a hinge cover 251 for covering an internal structure configuring a mechanism of the hinge structure. The hinge cover 251 may be exposed to the outside according to a degree to which the electronic device 101 is folded, or may be covered by the first housing part 210 and the second housing part 220. For example, while the electronic device 101 is in a folded state (e.g., FIG. 3B), the hinge cover 251 may be at least partially exposed through a space between the first housing part 210 and the second housing part 220. For example, while the electronic device 101 is in an unfolded state (e.g., FIG. 3A), the hinge cover 251 may be covered by the first housing part 210 and the second housing part 220.

The electronic device 101 may include the display 230 (e.g., the display module 160 of FIG. 1) disposed in the space provided by the first housing part 210 and the second housing part 220. For example, the display 230 may be at least partially accommodated in a recess formed in the first front side 211 of the first housing part 210 and the second front side 221 of the second housing part 220. The display 230 may include a first planar portion 231 aligned with respect to the first housing part 210, a second planar portion 232 spaced apart from the first planar portion 231 and aligned with respect to the second housing part 220, and a foldable portion 233 aligned with respect to the hinge structure 250 and extending from the first planar portion 231 to the second planar portion 232. The display 230 may be referred to as a foldable display or a flexible display. The first planar portion 231, the second planar portion 232, and the foldable portion 233 may form a surface of the display 230. The surface of the display 230 may at least partially form the first front side 211 of the first housing part 210 and the second front side 221 of the second housing part 220. The first planar portion 231, the second planar portion 232, and the foldable portion 233 may respectively define a first display area, a second display area, and a third display area of the display 230 in which visual information may be displayed.

The electronic device 101 may include a sub-display 235 (e.g., the display module 160 of FIG. 1) disposed in the first housing part 210. The sub-display 235 may be visible through the first rear side 212 of the first housing part 210.

The electronic device 101 may include a plurality of cameras (e.g., the camera module 180 of FIG. 1). For example, the electronic device 101 may include cameras 234 and 236. The camera 234 may be disposed in the first housing part 210 to obtain an image through a portion of the first rear side 212. The camera 236 may be disposed under the first planar portion 231 of the display 230. The camera 236 may be aligned with an opening at least partially penetrating the first planar portion 231, and may obtain an image through the hole. The camera 236 may be positioned in a screen display area of the display 230, but it is not limited thereto.

Hereinafter, states of the electronic device 101 will be described. The electronic device 101 may include a plurality of states including the unfolded state (e.g., FIG. 3A) and the folded state (e.g., FIG. 3B). The electronic device 101 may be transformed or changed in the unfolded state and the folded state. In addition, the electronic device 101 may include a plurality of intermediate states between the unfolded state and the folded state. An angle between the first housing part 210 and the second housing part 220 may vary according to a state of the electronic device 101. Herein, the unfolded state may be regarded as a fully open state, a flat or substantially flat state, or a fully unfolded state. Herein, the folded state may be regarded as a closed state, an unopen state, closed state, or a fully folded state.

Referring to FIG. 3A, in the unfolded state, the first housing part 210 and the second housing part 220 may form a first angle. For example, the first angle may be about 180 degrees. The first planar portion 231, the second planar portion 232, and the foldable portion 233 of the display 230 may form a substantially flat surface. A direction (e.g., a +z direction) in which the first front side 211 (or the first planar portion 231) of the first housing part 210 faces and a direction (e.g., the +z direction) in which the second front side 221 (or the second planar portion 232) of the second housing part 220 faces may be substantially the same.

Referring to FIG. 3B, in the unfolded state of the electronic device 101, the first housing part 210 and the second housing part 220 may be folded to face each other by rotating based on the folding axis f. The first housing part 210 and the second housing part 220 may be stacked with each other to form a second angle smaller than the first angle. For example, the second angle may be about 0 degrees. The foldable portion 233 of the display 230 may be bent to correspond to the second angle. The first front side 211 of the first housing part 210 may face the second front side 221 of the second housing part 220 or may overlap the second front side 221. The first housing part 210 and the second housing part 220 may at least partially contact each other, but it is not limited thereto. The direction (e.g., +z direction) in which the first front side 211 of the first housing part 210 faces and a direction (e.g., -z direction) in which the second front side 221 of the second housing part 220 faces may be opposite to each other. In the unfolded state, at least a portion of the display 230 may not be visible outside the electronic device 101, and the sub-display 235 may be visible outside the electronic device 101.

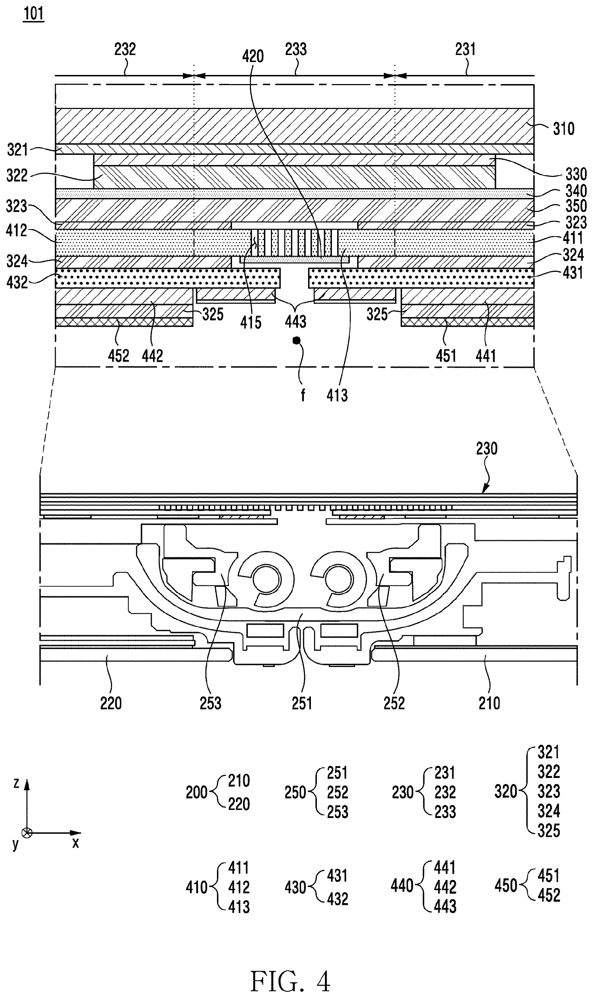

FIG. 4 is a cross-sectional view of an exemplary electronic device cut along line A-A' of FIG. 2A.

Referring to FIG. 4, an electronic device 101 may include a housing 200 including a first housing part 210 and a second housing part 220, a display 230, a hinge structure 250, and a supporting plate 410.

The display 230 may include a first planar portion 231 (or first portion 231), a second planar portion 232 (or second portion 232) spaced apart from the first planar portion 231, and a foldable portion 233 (or third portion 233) that connects the first planar portion 231 and the second planar portion 232 and is foldable.

An unfolded state of the electronic device 101 may be a state in which the first planar portion 231 and the second planar portion 232 of the display 230 face the same direction (e.g., a +z direction). For example, the housing 200 may include a first front side (e.g., the first front side 211 of FIG. 2A) on which the first planar portion 231 is disposed and a second front side (e.g., the second front side 221 of FIG. 2A) on which the second planar portion 232 is disposed. The unfolded state may be a state in which the first front side 211 and the second front side 221 face substantially the same direction. For example, the unfolded state may be a state in which the display 230 is unfolded. The unfolded state may be a state in which the first planar portion 231, the second planar portion 232, and the foldable portion 233 of the display 230 substantially form a plane. The unfolded state may be a state in which a surface of the first planar portion 231, a surface of the second planar portion 232, and a surface of the foldable portion 233 of the display 230 are aligned with one another.

A folded state of the electronic device 101 may be a state in which the first planar portion 231 and the second planar portion 232 of the display 230 face each other. For example, the folded state may be a state that a direction (e.g., a -x direction) in which the first planar portion 231 faces is opposite to a direction (e.g., a +x direction) in which the second planar portion 232 faces. For example, the folded state may be a state in which the direction in which the first front side 211 on which the first planar portion 231 is disposed faces and the direction of the second front side 221 on which the second planar portion 232 is disposed faces are opposite. For example, the folded state may be a state in which the first planar portion 231 and the second planar portion 232 are in contact with each other by folding the foldable portion 233.

For example, in the unfolded state of the electronic device 101, the first planar portion 231 may face substantially the same direction (e.g., the +z direction) as the second planar portion 232. For example, in the folded state of the electronic device 101, the first planar portion 231 may face the second planar portion 232. For example, the first planar portion 231 may be in contact with the second planar portion 232 in the folded state. For example, the first planar portion 231 and the second planar portion 232 may form a substantially plane in the unfolded state of the electronic device 101 and in the folded state of the electronic device 101. For example, the first planar portion 231 and the second planar portion 232 may be portions of the display 230 that are not deformable or at least not intended to be deformed.

For example, the foldable portion 233 (or deformable portion 233) may extend from the first planar portion 231 to the second planar portion 232. For example, the foldable portion 233 may be disposed between the first planar portion 231 and the second planar portion 232. For example, the foldable portion 233 may be configured to rotate the second planar portion 232 with respect to the first planar portion 231 by being deformed.

The display 230 may be referred to as a display stack or a display structure in which a plurality of layers are coupled.

For example, the display 230 may include a window 310 (or cover glass), which is an upper-most layer visually exposed to the outside of the electronic device 101. The window 310 may be at least partially deformable or may include one or more curved portions. For example, the window 310 may include a stacked structure of a plurality of windows, but an embodiment supported by the present disclosure is not limited thereto. The window 310 may form a portion of an exterior of the electronic device 101. For example, the window 310 may define a front side (e.g., the first front side 211 and the second front side 221 of FIG. 2A) of the electronic device 101.

For example, the display 230 may include a glass layer 330 attached under the window 310. The glass layer 330 may be a substantially transparent thin film type layer. The glass layer 330 may be formed of at least one of polyimide (PI) and ultra-thin glass (UTG), but the embodiment is not limited thereto. The glass layer 330 may be configured to be at least partially deformable together with the window 310 attached on the glass layer 330.

For example, the display 230 may include a display panel 340 attached under the glass layer 330. The display panel 340 may be configured to provide, for example, visual information through the glass layer 330 and the window 310 on the display panel 340 that are substantially transparent. For example, although not illustrated, the display panel 340 may include pixels configured to emit light and sub-pixels respectively included in the pixels. However, the embodiment supported by the present disclosure is not limited thereto.

For example, the display 230 may include a reinforcing layer 350 attached under the display panel 340. By supporting the display panel 340, the reinforcing layer 350 may reduce damage to the display panel 340 while the display 230 is deformed.

The layers or the stack structure included in the display 230 supported in the present disclosure are not limited to the above-mentioned embodiments, and for example, a portion of the layers in the above-mentioned display 230 may be omitted or one or more layers may be added within the display 230.

For example, the display 230 may include a polarizer attached under the window 310. The polarizer may reduce an amount of light reflected in the display 230 after being incident from the outside of the electronic device 101. As the amount of the light reflected in the display 230 decreases, visibility of the display 230 may be improved. However, the embodiment supported by the present disclosure is not limited to thereto, and the display 230 may include a plurality of layers including at least partially deformable areas and/or a stack structure of the plurality of layers.

The housing 200 may support the display 230. The housing 200 may include the first housing part 210 supporting the first planar portion 231 and the second housing part 220 supporting the second planar portion 232. For example, the first housing part 210 may surround at least a portion of the first planar portion 231. The second housing part 220 may surround at least a portion of the second planar portion 232. For example, the second housing part 220 may be configured to be rotatable with respect to the first housing part 210. The second housing part 220 may rotate the second planar portion 232 with respect to the first planar portion 231 by rotating with respect to the first housing part 210. For example, when the display 230 is viewed from above (e.g., when viewed in a -z direction), the first housing part 210 may at least partially overlap with the first planar portion 231. For example, when the display 230 is viewed from above (e.g., when viewed in the -z direction), the second housing part 220 may at least partially overlap with the second planar portion 232.

For example, the first planar portion 231 may be disposed on the first housing part 210. The second planar portion 232 may be disposed on the second housing part 220. In the present document, when an element is mentioned as being "on" another element, it should be understood that the element may be directly on the other element or that intervening elements may exist therebetween.

For example, in the present document, "B disposed on A" may refer to "B disposed over A". For example, in the present document, "B disposed on A" may refer to "B facing A and being spaced apart from A". For example, "the first planar portion 231 disposed on the first housing part 210" may refer to "the first planar portion 231 in contact with the first housing part 210". For example, "the first planar portion 231 disposed on the first housing part 210" may refer to "the first planar portion 231 facing the first housing part 210 and being spaced apart from the first housing part 210".

The hinge structure 250 may be configured to provide (e.g. enable or facilitate a transition between) the folded state in which the first planar portion 231 faces the second planar portion 232 and the unfolded state in which the first planar portion 231 and the second planar portion 232 face substantially the same direction by rotatably coupling the first housing part 210 and the second housing part 220. For example, the hinge structure 250 may rotatably connect the first housing part 210 and the second housing part 220. For example, the hinge structure 250 may be at least partially disposed between the first housing part 210 and the second housing part 220. For example, the hinge structure 250 may support the foldable portion 233 of the display 230. For example, the hinge structure 250 may be configured to deform the foldable portion 233 by rotatably coupling the first housing part 210 and the second housing part 220. For example, the hinge structure 250 may at least partially overlap with the foldable portion 233 when the display 230 is viewed from above (e.g., when viewed in the -z direction).

The supporting plate 410 may support the display 230 attached on the supporting plate 410, or display layers included in the display 230. The supporting plate 410 may include a first supporting portion 411 disposed under the first planar portion 231 of the display 230, a second supporting portion 412 disposed under the second planar portion 232 of the display 230, and a third supporting portion 413 disposed under the foldable portion 233 of the display 230. For example, the first supporting portion 411 may be spaced apart from the second supporting portion 412. For example, the third supporting portion 413 may connect the first supporting portion 411 and the second supporting portion 412. The third supporting portion 413 may extend from the first supporting portion 411 to the second supporting portion 412. For example, the third supporting portion 413 of the supporting plate 410 may include a plurality of slits 415 (or openings 415, gaps 415 etc.) to provide flexibility to the foldable portion 233 of the display 230. However, the embodiment supported by the present disclosure is not limited to this, and for example, at least a portion of the first supporting portion 411 and/or at least a portion of the second supporting portion 412, connected to the third supporting portion 413, may form a portion of the plurality of slits 415 to reduce damage to the planar portions 231 and 232 of the display 230 while the electronic device 101 changes from the unfolded state to the folded state or from the folded state to the unfolded state. However, the embodiment supported by the present disclosure is not limited thereto.

For example, each of the plurality of slits 415 may have a width in a direction parallel to an x-axis. The width of each of the plurality of slits 415 may be substantially the same, but it is not limited thereto. For example, a size and/or a length of each of at least a portion of the plurality of slits 415 may be different from each other. For example, the plurality of slits 415 may be formed on a portion of the first supporting portion 411 and at least a portion of the third supporting portion 413. The plurality of slits 415 may be arranged to gradually decrease in width and/or length from the first supporting portion 411 to a center portion of the third support portion 413. For example, the plurality of slits 415 may be formed on a portion of the second supporting portion 412 and the at least a portion of the third support portion 413. The plurality of slits 415 may be arranged to gradually decrease in width and/or length from the second supporting portion 412 to the center portion of the third supporting portion 413. For example, the plurality of slits 415 may be arranged such that density per unit area within the supporting plate 410 decreases from the first supporting part 411 and/or the second supporting portion 412 to the third supporting portion 413. However, the embodiment supported by the present disclosure is not limited to thereto, and the plurality of slits 415 may be formed or disposed in various forms to provide the flexibility to the foldable portion 233 of the display 230. For example, by including the third supporting portion 413 including the plurality of slits 415, the supporting plate 410 may guide deformation of display layers included in the foldable portion 233 and disposed on the supporting plate 410, and support the display layers. The supporting plate 410 may be referred to as a lattice structure and/or a lattice plate in terms of including the plurality of slits 415 for guiding the deformation of the display 230, but it is not limited thereto.

The electronic device 101 may include a protective member 420 attached under at least a portion of the third supporting portion 413 of the supporting plate 410. The protective member 420 may have elasticity so as to be deformed as the third supporting portion 413 of the supporting plate 410 is deformed. The protective member 420 may include, for example, thermoplastic polyurethane (TPU), but the embodiment supported by the present disclosure is not limited thereto. The protective member 420 may cover, for example, the plurality of slits 415 formed in the third supporting portion 413. For example, the protective member 420 may be disposed between adhesive layers 324 that attach an electromagnetic induction panel 430 to the supporting plate 410. The protective member 420 may reduce a step formed by the adhesive layers 324 by being disposed between the adhesive layers 324. The protective member 420 may reduce inflow of a foreign substance into the plurality of slits 415 formed in the third supporting part 413, by attaching under the third supporting portion 413. However, the embodiment supported by the present disclosure is not limited thereto.

The electronic device 101 may include the electromagnetic induction panel 430 linkable with a stylus, which is usable with the display 230. The electromagnetic induction panel 430 may be referred to as a digitizer in terms of interacting with the stylus, but it is not limited thereto. For example, the electromagnetic induction panel 430 may be configured to interact electromagnetically with the stylus. A processor (e.g., the processor 120 of FIG. 1) of the electronic device 101 may be configured to obtain input information from an electrical interaction between the stylus and the electromagnetic induction panel 430. For example, the electromagnetic induction panel 430 may generate a magnetic field of a designated intensity as an alternating current flows through the electromagnetic induction panel 430. As the stylus approaches the electromagnetic induction panel 430, an induced current may flow through a coil disposed in the stylus by the magnetic field. The stylus may detect the induced current flowing through the coil and transmit an electromagnetic wave signal to the electromagnetic induction panel 430. The electromagnetic induction panel 430 may be configured to detect a position and an intensity of the electromagnetic wave signal received from the stylus and transmit information related to the electromagnetic wave signal to the processor 120 of the electronic device 101. The processor 120 may be configured to display information according to an operation of the stylus through the display 230 by receiving the information related to the electromagnetic wave signal from the electromagnetic induction panel 430.

For example, the electromagnetic induction panel 430 may be attached under the supporting plate 410 (e.g., attached through the adhesive layers 324). For example, the electromagnetic induction panel 430 may include a first panel 431 attached to the first supporting portion 411 of the supporting plate 410 and a second panel 432 attached to the second supporting portion 412 of the supporting plate 410 to provide the flexibility to the foldable portion 233 of the display 230. The first panel 431 and the second panel 432 may be respectively separated from each other with respect to the foldable portion 233 of the display 230. By separating the first panel 431 and the second panel 432, the electromagnetic induction panel 430 may provide the flexibility to the foldable portion 233 of the display 230 while the electronic device 101 changes from the unfolded state to the folded state or from the folded state to the unfolded state.

The electronic device 101 may include a shielding layer 440 for absorbing an electromagnetic wave from the electromagnetic induction panel 430. The shielding layer 440 may be attached under the electromagnetic induction panel 430. The shielding layer 440 may include, for example, magnetic metal powder (MMP), but the embodiment is not limited thereto. For example, the shielding layer 440 may cover a portion of the electromagnetic induction panel 430. For example, the shielding layer 440 may include shielding portions 441, 442, and 443 separated from each other to provide the flexibility to the foldable part 233 of the display 230. For example, the first shielding portion 441 may be attached under the first panel 431. The second shielding portion 442 may be attached under the second panel 432. The third shielding portion 443 may be attached under a portion of the first panel 431 and a portion of the second panel 432. For example, the third shielding portion 443 may be disposed under the foldable portion 233 of the display 230 in the unfolded state of the electronic device 101. However, the embodiment supported by the present disclosure is not limited thereto.

The electronic device 101 may include a conductive layer 450 for reducing an influence of the electromagnetic induction panel 430 by at least one conductive portion (e.g., the at least one conductive portion 225 of FIG. 2A) included in the housing 200. The conductive layer 450 may be attached under the shielding layer 440 (e.g., attached through the adhesive layers 325). The conductive layer 450 may include at least one of copper and polyethylene terephthalate (PET), but the embodiment is not limited thereto. The conductive layer 450 may be configured such that a frequency of a signal from the electromagnetic induction panel 430 is maintained uniformly. The conductive layer 450 may include a first conductive layer 451 attached under the first shielding portion 441 and a second conductive layer 452 attached under the second shielding portion 442. However, the embodiment supported by the present disclosure is not limited thereto.

The electronic device 101 may include one or more adhesive layers 320 for attaching display layers within the display 230 and/or a plurality of layers attached under the display 230 to each other. For example, the display 230 may include adhesive layers 321 and 322. The adhesive layer 321 may attach the glass layer 330 to the window 310 by being interposed between the window 310 and the glass layer 330. The adhesive layer 322 may attach the display panel 340 to the glass layer 330 by being interposed between the glass layer 330 and the display panel 340.

For example, the electronic device 101 may include an adhesive layer 323 that attaches the supporting plate 410 to the display 230 by being interposed between the display 230 and the supporting plate 410. For example, the electronic device 101 may include adhesive layers 324 that attaches the electromagnetic induction panel 430 to the supporting plate 410 by being interposed between the supporting plate 410 and the electromagnetic induction panel 430. For example, the electronic device 101 may include an adhesive layer 325 that attaches the conductive layer 450 to the shielding layer 440 by being interposed between the shielding layer 440 and the conductive layer 450. However, the embodiment supported by the present disclosure is not limited thereto, and the one or more adhesive layers 320 may include a plurality of adhesive layers configured to attach the plurality of display layers within the display 230 to each other or attach the plurality of layers under the display 230 to each other, and characteristics of each of the plurality of adhesive layers may be substantially the same or different from each other.

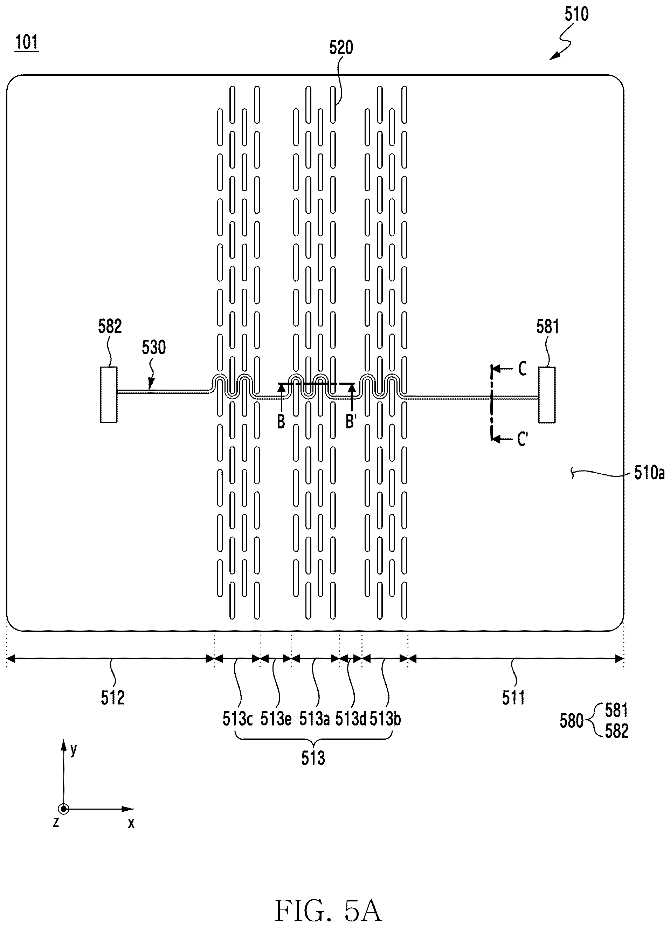

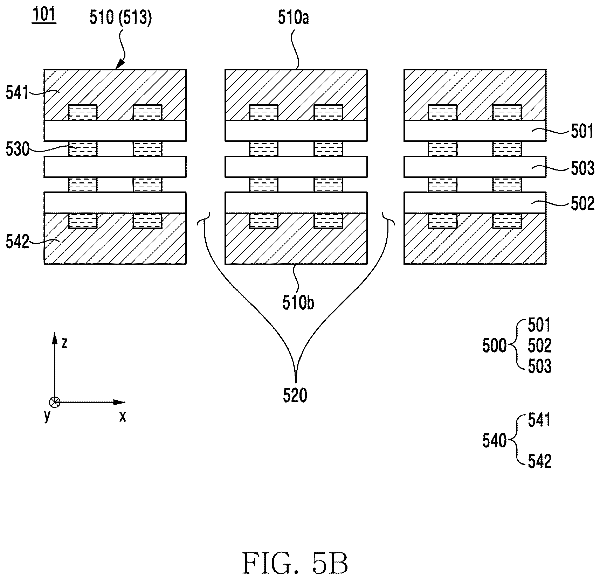

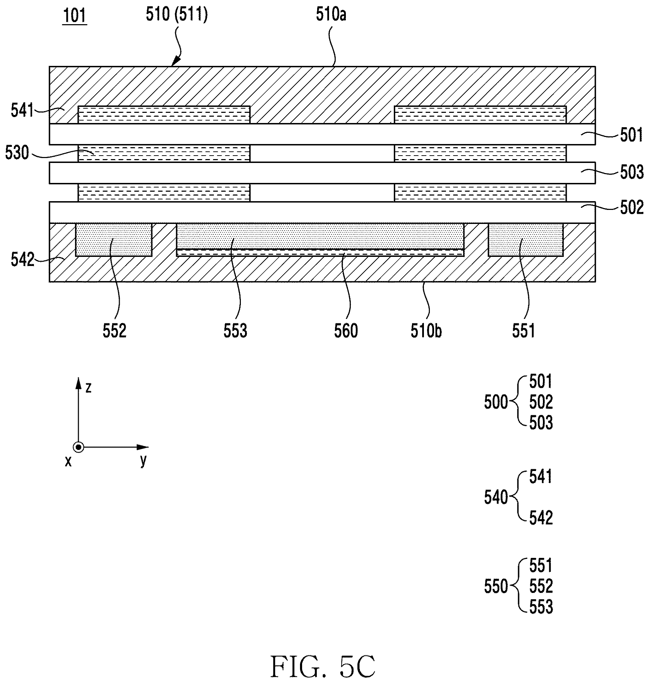

FIG. 5A is a top plan view of a substrate of an exemplary electronic device. FIG. 5B is a cross-sectional view of a substrate of an exemplary electronic device cut along line B-B' of FIG. 5A. FIG. 5C is a cross-sectional view of a substrate of an exemplary electronic device cut along line C-C' of FIG. 5A. Note that FIG. 5B illustrates a cross-sectional view along part of line B-B'.

Referring to FIGS. 5A, 5B, and 5C, an electronic device 101 may include a display (e.g., the display 230 of FIG. 2A), a substrate 510, and a conductive line 530. The display 230 may include a first display portion (e.g., the first planar portion 231 of FIG. 2A), a second display portion (e.g., the second planar portion 232 of FIG. 2A), and a third display portion (e.g., the foldable portion 233 of FIG. 2A) configured to be extended and bent from the first display portion 231 to the second display portion 232.

The substrate 510 may be disposed under the display 230. The substrate 510 may include a first portion 511 aligned with respect to the first display portion 231, a second portion 512 aligned with respect to the second display portion 232, and a third portion 513 aligned with respect to the third display portion 233 and including a plurality of holes 520. A disposition of the portions 511, 512, and 513 of the substrate 510 may be substantially the same as or similar to a disposition of the supporting portions 411, 412, and 413 of the supporting plate 410 of FIG. 4. For example, the first portion 511 may be disposed under the first display portion 231 of the display 230. The second portion 512 may be disposed under the second display portion 232 of the display 230. The third portion 513 may be disposed under the third display portion 233 of the display 230 between the first portion 511 and the second portion 512. For example, the third portion 513 may be configured to be bent by a hinge structure (e.g., the hinge structure 250 of FIG. 2C) along with the third display portion 233 disposed over the third portion 513. The plurality of holes 520 formed in the third portion 513 may guide deformation of the third portion 513 and provide flexibility to the third portion 513. However, an embodiment supported by the present disclosure is not limited thereto. The plurality of holes 520 may alternatively be termed openings 520, gaps 520 or cavities 520.

The third portion 513 of the substrate 510 may include portions without the plurality of holes 520 to have a continuous surface. For example, the third portion 513 of the substrate 510 may include bendable portions 513a, 513b, 513c, 513d, and 513e configured to be bent by the hinge structure 250. For example, the third portion 513 may include the bendable portions 513a, 513b, and 513c (or first portions 513a, 513b, 513c) in which the plurality of holes 520 are formed, and the bendable portions 513d, and 513e (or second portions 513d, 513e) disposed between the bendable portions 513a, 513b, and 513c and having the continuous surface. For example, a width of each of the bendable portions 513d, and 513e having the continuous surface may be greater than a distance between two adjacent holes among the plurality of holes 520. However, the embodiment supported by the present disclosure is not limited thereto. The third portion 513 may increase a supporting area of the third display portion 233 of the display 230 supported by the third portion 513 by including a portion in which the plurality of holes 520 are not formed to have the continuous surface. That is, by including at least one portion in which holes are not formed, a size of a supporting area of the third display portion 230 is increased.

The conductive line 530 (or wiring line 530) may be disposed on the substrate 510. For example, the substrate 510 may include the conductive line 530. The substrate 510 may be referred to as a printed circuit board (PCB) in that it includes the conductive line 530 or the conductive line 530 is formed thereon, but the embodiment is not limited thereto. The conductive line 530 may extend from the first portion 511 of the substrate 510 to the second portion 512, across the third portion 513. The conductive line 530 may be disposed on the substrate 510, so as to detour closely around the plurality of holes 520. For example, the conductive line 530 may be formed in the region(s) between the plurality of holes 520, to extend across the substrate 510.

For example, the conductive line 530 may include a first conductive line portion disposed in the first portion 511 of the substrate 510, a second conductive line portion disposed in the second portion 512 of the substrate 510, and a third conductive line portion extending from the first conductive line portion to the second conductive line portion 512 across the third portion 513. The third conductive line portion may be formed in the third portion 513 to detour (or bypass) around the plurality of holes 520 of the third portion 513. The third conductive line portion may be disposed to circumvent the plurality of holes (520), e.g.so as not to pass over a hole. The third conductive line portion may connect the first conductive line portion and the second conductive line portion 512 to each other by extending through a plurality of bridge portions of the third portion 513 that separates each of the plurality of holes 520. However, the embodiment supported by the present disclosure is not limited to thereto, and for example, the bendable portions 513d, and 513e having the continuous surface may be omitted. For example, according to a type of a hinge structure on which the substrate 510 is disposed, the bendable portions 513d, and 513e may be added or a spacing between the bendable portions 513d and 513e and/or the plurality of holes 520 may vary. However, the embodiment supported by the present disclosure is not limited to thereto.

For example, the conductive line 530 may be formed or coupled in the portion in which the plurality of holes 520 are not formed among the third portion 513 of the substrate 510. For example, the conductive line 530 may be disposed next to at least some of the plurality of holes 520 or near the plurality of holes 520 within the third portion 513 of the substrate 510. For example, the conductive line 530 may extend from the first portion 511 of the substrate 510 to the second portion 512 through the bendable portions 513a, 513b, 513c, 513d, and 513e of the third portion 513. A portion of the conductive line 530 disposed in the bendable portions 513a, 513b, and 513c including the plurality of holes 520 may be formed in the bendable portions 513a, 513b, and 513c, so as to detour around the plurality of holes 520. However, the embodiment supported by the present disclosure is not limited to thereto.

The electronic device 101 may include a plurality of terminals 580. The plurality of terminals 580 may be disposed in the substrate 510. For example, the plurality of terminals 580 may be disposed or formed in the substrate 510. For example, the plurality of terminals 580 may include a first terminal 581 disposed in the first portion 511 of the substrate 510 and a second terminal 582 disposed in the second portion 512. The terminals 581 and 582 may be connected to the conductive line 530 extending from the first portion 511 to the second portion 512 across the third portion 513. The terminals 581 and 582 spaced apart from each other may be electrically connected to each other, through the conductive line 530. The plurality of terminals 580 may be referred to as connectors of the electronic device 101, but the embodiment supported by the present disclosure is not limited thereto.

The substrate 510 may include a plurality of layers 500. The conductive line 530 may be disposed between two of the plurality of layers 500. For example, the substrate 510 may be formed by a stacked structure of the plurality of layers 500. Each of the plurality of layers 500 may provide surfaces on which the conductive line 530 is printed. The plurality of layers 500 may form the substrate 510 by being stacked on each other. For example, the conductive line 530 may include a plurality of conductive lines formed on each of the plurality of layers 500. The plurality of layers 500 may be formed of an electrically insulation material or a dielectric material to electrically insulate the plurality of conductive lines from each other, but the embodiment supported by the present disclosure is not limited thereto.

For example, the plurality of layers 500 may include a first layer 501, a second layer 502, and a third layer 503 between the first layer 501 and the second layer 502. For example, the first layer 501 may be the upper-most layer of the plurality of layers 500. The second layer 502 may be the bottom-most layer of the plurality of layers 500. For example, the conductive line 530 may include the plurality of conductive lines formed on the plurality of layers 500. At least a portion of the plurality of conductive lines 530 may be visible from the outside of the substrate 510 by being disposed on the layers 501 and 502 disposed on the outer-most of the plurality of layers 500. A remaining portion of the plurality of conductive lines may be disposed inside the substrate 510 by being disposed between the layers 501, 502, and 503. However, the embodiment supported by the present disclosure is not limited to thereto.

For example, the stacked structure of the plurality of layers 500 of the substrate 510 on which the conductive line 530 is formed may correspond to a printed circuit board (PCB) or a flexible printed circuit board (FPCB) structure. For example, a layer of the plurality of layers 500 on which the conductive line 530 is disposed may be referred to as a conductive layer (e.g., a copper (Cu) layer) of the flexible printed circuit board. The layers 501, 502, and 503 for electrically insulating the conductive line 530 may be non-conductive layers (e.g., polyimide (PI) layers) of the flexible printed circuit board. In various examples, the layers 501, 502, 503 may be formed from graphite, such that a heat conduction path between the first portion 511 and the second portion 512, across the third portion 513, is provided for heat generated from the conductive line 530. However, the embodiment supported by the present disclosure is not limited to thereto.

The substrate 510 may include a coating layer 540 attached to the plurality of layers 500. For example, the coating layer 540 may define or form an outer surface of the substrate 510 by covering the plurality of layers 500. For example, the coating layer 540 may be coated on the layers 501 and 502 disposed on the outer-most of the plurality of layers 500. For example, the coating layer 540 may include a first coating layer 541 coated on the first layer 501 and a second coating layer 542 coated on the second layer 502. For example, the first coating layer 541 may define a first surface 510a facing the display 230 of the substrate 510. The first coating layer 541 may cover the conductive line 530 disposed on the first layer 501. For example, the second coating layer 542 may define a second surface 510b opposite to the first surface 510a of the substrate 510. The second coating layer 542 may cover the conductive line 530 disposed on the second layer 502. For example, the coating layer 540 may include at least one of resin, fiber, and/or epoxy, but the embodiment supported by the present disclosure is not limited thereto.

The substrate 510 may include shielding members 550 and 560 for shielding the conductive line 530. For example, the substrate 510 and the conductive line 530 formed on the substrate 510 may function as a digitizer (e.g., the electromagnetic induction panel 430 of FIG. 4) for linking with a stylus outside the electronic device 101. The conductive line 530 may be configured to form a magnetic field for linking with the stylus, for example, by forming a loop on the substrate 510. The shielding members 550 and 560 may reduce noise of the magnetic field for linking with the stylus by electronic components, by reducing interference between the electronic components (e.g., a camera or a speaker) around the conductive line 530 and the magnetic field formed by the conductive line 530.

For example, the shielding members 550 and 560 may be attached to the first portion 511 and/or the second portion 512 among the portions 511, 512, and 513 of the substrate 510. For example, the first shielding member 550 may be a magnetic shielding member. The first shielding member 550 may include, for example, a first shielding portion 551, a second shielding portion 552, and a third shielding portion 553 disposed between the first shielding portion 551 and the second shielding portion 552. For example, the second shielding member 560 attached under the third shielding portion 553 of the first shielding member 550 may be a conductive shielding member. However, the embodiment supported by the present disclosure is not limited thereto.

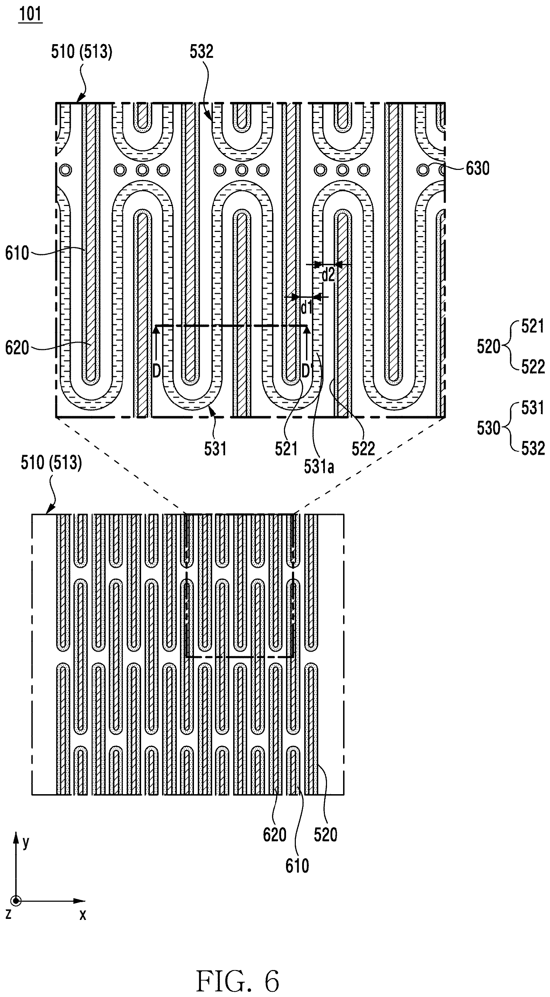

The conductive line 530 formed on the substrate 510 may require a function for transmitting and receiving high power signals for power supply of the electronic device 101 and/or high frequency band signals for wireless communication with an external electronic device (e.g., the electronic device 102 of FIG. 1) instead of the function for linking with the stylus outside the electronic device 101. A structure of the substrate 510 for transmitting and receiving the high power signals and/or the high frequency band signals and a structure for shielding the conductive line 530 will be described through an exemplary illustration below in FIG. 6.

FIG. 6 illustrates a portion of a substrate of an exemplary electronic device.

Referring to FIG. 6, an electronic device 101 may include a first display portion (e.g., the first display portion 231 of FIG. 2A), a second display portion (e.g., the second display portion 232 of FIG. 2A), and a third display portion (e.g., the third display portion 233 of FIG. 2A) that is configured to be extended and bent from the first display portion 231 to the second display portion 232. The electronic device 101 may include a substrate 510 including a first portion (e.g., the first portion 511 of FIG. 5A) disposed under a display 230 and aligned with respect to the first display portion 231, a second portion aligned with respect to the second display portion 232 (e.g., the second portion 512 of FIG. 5A), and a third portion 513 aligned with respect to the third display portion 233 and including a plurality of holes 520. The electronic device 101 may include a conductive line 530, disposed on the substrate 510, extending from the first portion 511 to the second portion 512 across the third portion 513, and disposed adjacent to the plurality of holes 520 to detour around the plurality of holes 520 on the third portion 513.

The conductive line 530 may be used to transmit high power signals and/or high frequency band signals. For example, the electronic device 101 may include wireless communication circuitry (e.g., the wireless communication module 192 of FIG. 1) for wireless communication with an external electronic device (e.g., the electronic device 102 of FIG. 1). The conductive line 530 may be used to transmit signals from the wireless communication circuitry to the external electronic device. For example, the conductive line 530 may not form a loop for forming a magnetic field, unlike the conductive line 530 exemplarily illustrated in FIGS. 5B and 5C. For example, the conductive line 530 may be linearly extended from the first portion 511 of the substrate 510 to the second portion 512 by detouring around the plurality of holes 520 of the third portion 513. However, an embodiment supported by the present disclosure is not limited thereto.

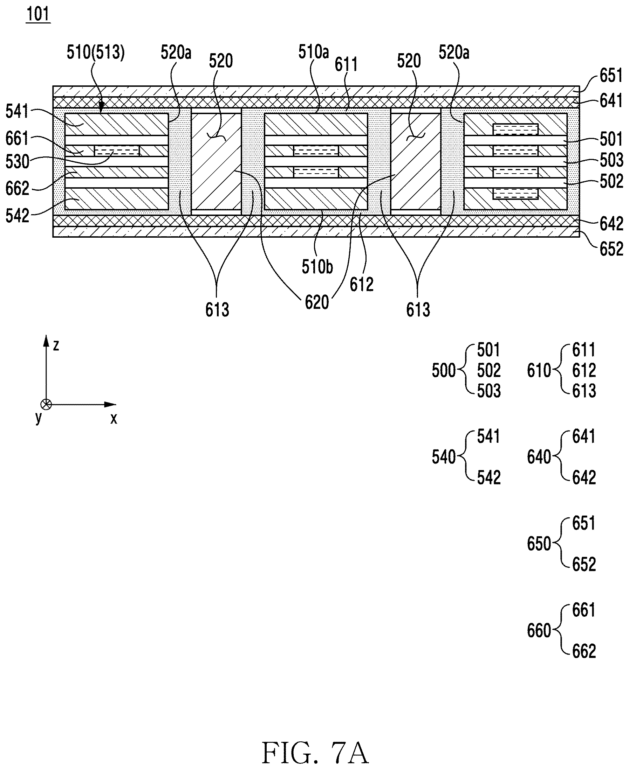

The electronic device 101 may include a conductive material 610 plated on (or disposed on) an inner surface (e.g., an inner surface 520a of FIG. 7A) of each of the plurality of holes 520 to shield the conductive line 530. For example, the conductive material 610 may be formed or disposed on the inner surface 520a of each of the plurality of holes 520 of the third portion 513. For example, the conductive material 610 may be disposed adjacent to the conductive line 530 or near the conductive line 530 by being plated on the inner surface 520a of each of the plurality of holes 520. For example, the conductive material 610 may surround the conductive line 530 by being disposed along the conductive line 530. For example, the conductive material 610 may include copper plating, but the embodiment supported by the present disclosure is not limited thereto, and the conductive material 610 may include a metal material and/or an alloy material plated on the inner surface 520a of each of the plurality of holes 520.

For example, the high-power signals and/or the high-frequency signals may be transmitted through the conductive line 530. The conductive material 610 may shield the conductive line 530 by being deposited on the inner surface 520a of each of the plurality of holes 520 disposed adjacent to the conductive line 530. For example, the conductive material 610 may form a waveguide to reduce signal loss of the conductive line 530 by being disposed on the inner surface 520a of each of the plurality of holes 520. The conductive material 610 may reduce signal loss and noise of signals transmitted through the conductive line 530 by shielding the conductive line 530 around the conductive line 530. However, the embodiment supported by the present disclosure is not limited thereto.

The electronic device 101 may include a conductive ink material 620 (or conductive material 620) that is filled in the plurality of holes 520 to shield the conductive line 530 together with the conductive material 610, and is in contact with the conductive material 610. For example, the conductive ink material 620 may occupy a space formed by the plurality of holes 520 together with the conductive material 610. For example, the conductive ink material 620 may support the conductive material 610 (or the inner surface 520a of each of the plurality of holes 520 in which the conductive material 610 is plated) by being attached to the conductive material 610. For example, the conductive ink material 620 may be electrically connected to the conductive material 610 by being in contact with the conductive material 610.

For example, the conductive ink material 620 may be disposed adjacent to the conductive line 530 or disposed around the conductive line 530, by being filled in the plurality of holes 520. For example, the conductive ink material 620 may surround the conductive line 530 by being disposed along the conductive line 530 together with the conductive material 610, e.g. with the conductive ink material 620 disposed in holes around which the conductive line 530 is formed. For example, the conductive ink material 620 may shield the conductive line 530 together with the conductive material 610 by being disposed in the plurality of holes 520 disposed adjacent to the conductive line 530. For example, the conductive ink material 620 may form the waveguide to reduce the signal loss of the conductive line 530 by being disposed along the conductive line 530 together with the conductive material 610. The conductive ink material 620 may reduce the signal loss and the noise of the signals transmitted through the conductive line 530 by shielding the conductive line 530 around the conductive line 530 together with the conductive material 610. However, the embodiment supported by the present disclosure is not limited thereto.

The conductive line 530 may include a plurality of conductive lines adjacent to each other while detouring around the plurality of holes 520 of the third portion 513. For example, the conductive line 530 may include a first conductive line 531 disposed on the substrate 510 and a second conductive line 532 disposed adjacent to the first conductive line 531. Like the first conductive line 531, the second conductive line 532 may extend from the first portion 511 of the substrate 510 to the second portion 512 across the third portion 513, and may be disposed to detour around the plurality of holes 520 on the third portion 513. For example, within the third portion 513 of the substrate 510, a portion of the first conductive line 531 may be disposed adjacent to or facing a portion of the second conductive line 532. Since the conductive lines 531 and 532 are disposed adjacent to each other, noise may occur between signals transmitted through the conductive lines 531 and 532. The substrate 510 may require a structure for shielding the conductive lines 531 and 532 from each other.

The substrate 510 may include a plurality of conductive vias 630 (or vias 630, which may be filled with or otherwise include conductive material) that at least partially penetrate the substrate 510 and are disposed between the first conductive line 531 and the second conductive line 532. For example, the plurality of conductive vias 630 may at least partially penetrate the third portion 513 of the substrate 510. For example, the plurality of conductive vias 630 may be surrounded by the plurality of holes 520 and the conductive lines 531 and 532. For example, the plurality of conductive vias 630 may be arranged in a direction (e.g., a +x direction or a -x direction) in which the conductive lines 531 and 532 extend.

For example, the plurality of conductive vias 630 may shield the conductive lines 531 and 532 from each other by being disposed between the conductive lines 531 and 532. For example, the plurality of conductive vias 630 may form a via wall that shields the conductive lines 531 and 532 from each other between the plurality of holes 520. For example, the via wall formed by the plurality of conductive vias 630 may reduce interference between the conductive lines 531 and 532 and reduce noise of signals from the conductive lines 531 and 532, by isolating the conductive lines 531 and 532 from each other, which are used for transmitting the high power signals and/or the high frequency band signals. For example, the via wall formed by the plurality of conductive vias 630 may be referred to as a via fence or a picket fence, but the embodiment supported by the present disclosure is not limited thereto. The electronic device 101 may reduce the signal loss and the noise of the signals transmitted through the conductive line 530, by including the plurality of conductive vias 630 shielding the conductive line 530 together with the conductive material 610 and the conductive ink material 620.

The plurality of holes 520 may include a first hole 521 and a second hole 522 disposed adjacent to the first hole 521. A distance d1 between the first hole 521 and a conductive portion 531a of the first conductive line 531 disposed between the first hole 521 and the second hole 522 may correspond to a distance d2 between the second hole 522 and the conductive portion 531a. For example, the vertical distance d1 from an inner surface of the first hole 521 to the conductive portion 531a of the first conductive line 531 may be substantially the same as the vertical distance d2 from an inner surface of the second hole 522 adjacent to the first hole 521 to the conductive portion 531a. For example, the distance d1 from the conductive material 610 plated on the inner surface of the first hole 521 to the conductive portion 531a of the first conductive line 531 may correspond to the distance d2 from the conductive material 610 plated on the inner surface of the second hole 522 to the conductive portion 531a. As the distances from the adjacent holes 521 and 522 to the conductive portion 531a disposed between the holes 521 and 522 are substantially the same as each other, the conductive material 610 plated on the inner surfaces of each of the holes 521 and 522 may provide stability to the signals transmitted through the conductive line 530 and reduce the noise of the signals.

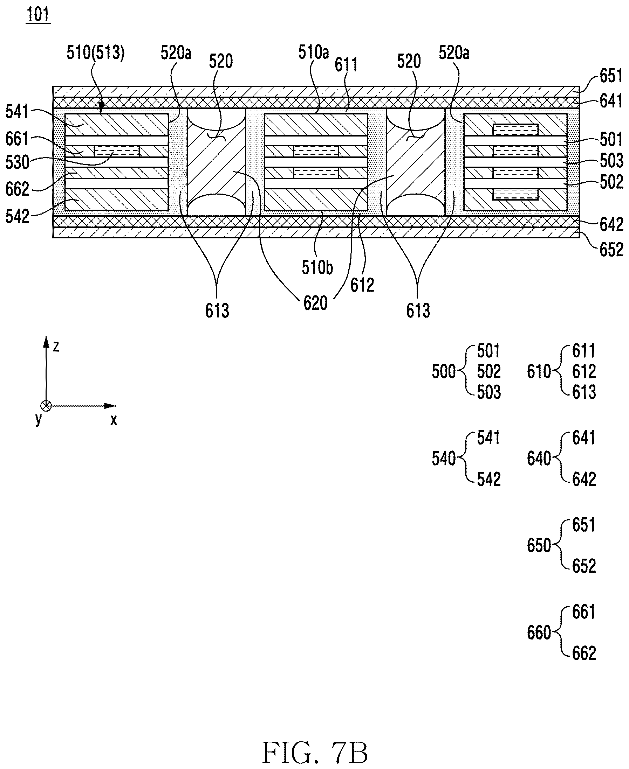

FIGS. 7A and 7B are cross-sectional views of a substrate of an exemplary electronic device cut along line D-D' of FIG. 6.

Referring to FIGS. 7A and 7B, an electronic device 101 may include a first display portion (e.g., the first display portion 231 of FIG. 2A), a second display portion (e.g., the second display portion 232 of FIG. 2A), and a third display portion (e.g., the third display portion 233 of FIG. 2A) that is configured to be extended and bent from the first display portion 231 to the second represented part 232. The electronic device 101 may include a substrate 510 including a first portion (e.g., the first portion 511 of FIG. 5A) disposed under a display 230 and aligned with respect to the first display portion 231, a second portion aligned with respect to the second display portion 232 (e.g., the second portion 512 of FIG. 5A), and a third portion 513 aligned with respect to the third display portion 233 and including a plurality of holes 520. The electronic device 101 may include a conductive line 530, disposed on the substrate 510, extending from the first portion 511 to the second portion 512 across the third portion 513, and disposed adjacent to the plurality of holes 520 to detour around the plurality of holes 520 on the third portion 513. The electronic device 101 may include a conductive material 610 plated on an inner surface 520a of each hole of the plurality of holes 520 to shield the conductive line 530. The electronic device 101 may include a conductive ink material 620 filling the plurality of holes 520 to shield the conductive line 530 together with the conductive material 610. However, an embodiment supported by the present disclosure is not limited thereto, and for example, the electronic device 101 may include structures and/or configurations (e.g., the plurality of layers 500, the coating layer 540, and the plurality of conductive vias 630) exemplarily illustrated and described in FIGS. 5A to 6 to the extent that they are not inconsistent. Hereinafter, overlapping descriptions of the structures and/or the configurations having the same reference numerals exemplarily illustrated and described in FIG. 5A to FIG. 6 may be omitted.

The conductive material 610 may be plated on the third portion 513 such that the conductive material 610 surrounds the conductive line 530. For example, the conductive material 610 may be plated on the third portion 513 to cover the third portion 513 of the substrate 510. For example, the conductive material 610 may surround the conductive line 530 disposed on the third portion 513 by being formed on an outer surface of the third portion 513. However, the embodiment is not limited thereto. For example, the conductive material 610 may be plated on the substrate 510 to surround the entire portions 511, 512, and 513 of the substrate 510. For example, the conductive material 610 may surround the entire conductive line 530 disposed on the substrate 510 by being plated on the outer surface of the substrate 510. However, the embodiment supported by the present disclosure is not limited thereto.

For example, the conductive material 610 may include a first conductive portion 611 plated on a first surface 510a facing a display 230 of the substrate 510, a second conductive portion 612 plated on a second surface 510b opposite to the first surface 510a of the substrate 510, and a third conductive portion 613, plated on the inner surface 520a of each hole of the plurality of holes 520, extending from the first conductive portion 611 to the second conductive portion 612. For example, the first conductive portion 611 may be a portion plated on a first coating layer 541 forming the first surface 510a of the substrate 510. The second conductive portion 612 may be a portion plated on a second coating layer 542 forming the second surface 510b of the substrate 510. For example, the third conductive portion 613 may connect the first conductive portion 611 and the second conductive portion 612 by being plated on the inner surface 520a of each hole of the plurality of holes 520. The third conductive portion 613 may surround the conductive line 530 disposed on the third portion 513 by extending from the first conductive portion 611 to the second conductive portion 612 through the plurality of holes 520. However, the embodiment supported by the present disclosure is not limited thereto. The conductive material 610 may form a waveguide for the conductive line 530 and may reduce signal loss of signals transmitted through the conductive line 530, by including the conductive portions 611, 612, and 613 surrounding the conductive line 530 in the third portion 513.

The conductive ink material 620 may provide an elastic support to the third portion 513 of the substrate 510 in a folded state of the foldable electronic device 101 by being adhered or elastically attached to the conductive material 610. For example, the conductive ink material 620 may be configured to be capable of restoring from a deformed state to a state prior to the deformed state by having elasticity and/or viscosity. For example, the conductive ink material 620 may be elastically deformable along the third portion 513 (or the plurality of holes 520) configured to deform while a state of the electronic device 101 is changed. It will be appreciated that this effect may, to an extent, also be realized by providing (e.g. arranging, depositing, filling etc.) the conductive ink material 620 in only some of the plurality of holes 520 (e.g. one or more of the holes, or a subset of the holes).

For example, when referring to FIGS. 7A and 7B sequentially, while the electronic device 101 changes from an unfolded state (e.g., the unfolded state of FIG. 2A) to a folded state (e.g., the folded state of FIG. 2B), a size of each of the plurality of holes 520 may increase due to the third portion 513 that is bent. Since the conductive ink material 620 is attached to the conductive material 610 plated on the inner surface 520a of each hole of the plurality of holes 520, the conductive ink material 620 may be tensed by the plurality of holes 520 whose size increases. Since the conductive ink material 620 has elasticity, stress applied to the third portion 513 may be dispersed in the folded state by a repulsive force applied to the conductive ink material 620. The conductive ink material 620 may reduce damage to the third portion 513 due to the plurality of holes 520 by dispersing the stress applied to the third portion 513 in the folded state.

For example, when referring to FIG. 7B and FIG. 7A sequentially, while the electronic device 101 changes from the folded state to the unfolded state, the size of each of the plurality of holes 520 may decrease due to the third portion 513 that is unfolded. Since the conductive ink material 620 is attached to the conductive material 610 plated on the inner surface 520a of each hole of the plurality of holes 520, the conductive ink material 620 may be compressed by the plurality of holes 520 whose size decreases. Since the conductive ink material 620 has elasticity, the conductive ink material 620 may be restored to a state prior to the folded state. Since the conductive ink material 620 is filled in the plurality of holes 520, while changing from the folded state to the unfolded state, the conductive ink material 620 may reduce damage to the plurality of holes 520 by guiding deformation of the plurality of holes 520. However, the embodiment supported by the present disclosure is not limited thereto. The electronic device 101 may reduce noise of signals transmitted through the conductive line 530, and reduce damage to the third portion 513 in which the plurality of holes 520 are formed while the state of the electronic device 101 changes, by including the conductive ink material 620, having the elasticity, filled in the plurality of holes 520.

The electronic device 101 may include a shielding film 640 that is at least partially attached to the third portion 513 to shield the conductive line 530 together with the conductive material 610, and covers the plurality of holes 520. For example, the shielding film 640 may be attached on the conductive material 610 plated on the substrate 510. For example, the shielding film 640 may shield the conductive line 530 together with the conductive material 610 and the conductive ink material 620 by covering the substrate 510. For example, the shielding film 640 may cover the plurality of holes 520 (or the conductive ink material 620 filled in the plurality of holes 520) of the third portion 513 by being attached on the substrate 510. However, the embodiment supported by the present disclosure is not limited thereto. It will be understood that, in various embodiments, the shielding film 640 is omitted.

For example, the shielding film 640 may include a first shielding film 641 attached on the first surface 510a facing the display 230 of the substrate 510, and a second shielding film 642 attached under the second surface 510b of the substrate 510 opposite to the first surface 510a. For example, the substrate 510 and the conductive material 610 plated on the substrate 510 may be disposed between the first shielding film 641 and the second shielding film 642. For example, the first shielding film 641 may be attached to the first conductive portion 611 of the conductive material 610 plated on the first surface 510a of the substrate 510. The second shielding film 642 may be attached to the second conductive portion 612 of the conductive material 610 plated on the second surface 510b of the substrate 510. However, the embodiment supported by the present disclosure is not limited thereto. The electronic device 101 may reduce signal loss and noise of signals transmitted through the conductive line 530 together with the conductive material 610 and the conductive ink material 620 by including the shielding film 640 attached to the substrate 510.

The electronic device 101 may include a protection film 650 attached on the shielding film 640. The shielding film 640 and the protection film 650 may have elasticity. For example, the protection film 650 may protect the shielding film 640 and the substrate 510 by covering the shielding film 640 and the substrate 510. For example, the protection film 650 may reduce inflow of a foreign substance into the plurality of holes 520, by covering the plurality of holes 520 together with shielding film 640. For example, the protection film 650 may include a first protection film 651 attached on the first shielding film 641 and a second protection film 652 attached on the second shielding film 642. The protection film 650 may correspond to the protective member 420 of FIG. 4 or may be formed of substantially the same material (e.g., thermoplastic polyurethane (TPU)) as the protective member 420, but the embodiment supported by the present disclosure is not limited thereto.

The substrate 510 may include an adhesive layer 660 infiltrated between a plurality of layers 500. For example, the adhesive layer 660 may attach the plurality of layers 500 to each other. The adhesive layer 660 may surround the conductive line 530 disposed between the plurality of layers 500, by being disposed between the plurality of layers 500. For example, the adhesive layer 660 may fill or occupy a space between the plurality of layers 500. For example, the adhesive layer 660 may include a first adhesive layer 661 disposed between a first layer 501 and a third layer 503, and a second adhesive layer 662 disposed between the third layer 503 and a second layer 502. The adhesive layer 660 may be referred to as a coating material surrounding the conductive line 530, together with the coating layer 540, but the embodiment supported by the present disclosure is not limited thereto. It will be understood that, in various embodiments, the adhesive layer 660 is omitted.

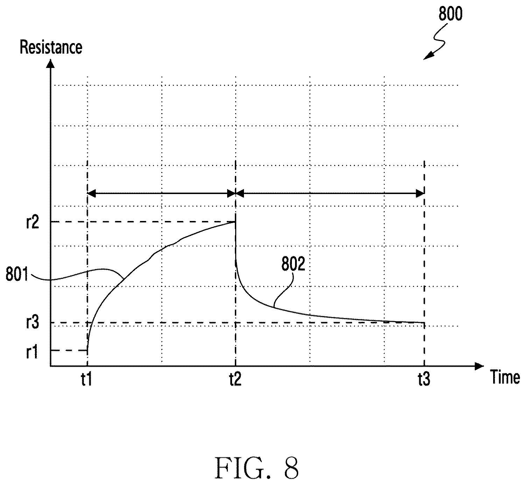

FIG. 8 is a graph indicating resistance of a conductive ink material according to a state of an exemplary electronic device.

Referring to FIG. 8, a horizontal axis of a graph 800 indicates time. A vertical axis of the graph 800 indicates resistance of a conductive ink material (e.g., the conductive ink material 620 of FIG. 6) of an electronic device (e.g., the electronic device 101 of FIG. 1) according to the time.

In a section 801 of the graph 800, the electronic device 101 may change from an unfolded state to a folded state. For example, at timing t1, the electronic device 101 may be in the unfolded state. The electronic device 101 may be in the folded state at timing t2. For example, as the electronic device 101 changes from the unfolded state to the folded state in the section 801, resistance applied to the conductive ink material 620 may increase from first resistance r1 to second resistance r2 greater than the first resistance r1. For example, when referring to FIG. 7A and FIG. 7B sequentially together, while the electronic device 101 changes from the unfolded state to the folded state, the conductive ink material 620 may be tensed or stretched along a third portion (e.g., the third portion 513 of FIG. 5A) of a substrate (e.g., the substrate 510 of FIG. 5A) that is deformed. As the conductive ink material 620 is tensed, the resistance applied to the conductive ink material 620 may increase.

In a section 802 of the graph 800, the electronic device 101 may change from the folded state to the unfolded state. For example, at the timing t2, electronic device 101 may be in the folded state. The electronic device 101 may be in the unfolded state at timing t3. For example, as the electronic device 101 changes from the folded state to the unfolded state in the section 802, the resistance applied to the conductive ink material 620 may decrease from the second resistance r2 to third resistance r3 smaller than the second resistance r2. Although not illustrated, as time elapses, the resistance applied to the conductive ink material 620 may be restored from the third resistance r3 to the first resistance r1 less than the third resistance r3. For example, when referring to FIG. 7B and FIG. 7A sequentially together, the conductive ink material 620 may be elastically restored along the third portion 513 of the substrate 510 while the electronic device 101 changes from the folded state to the unfolded state. As the conductive ink material 620 is restored (e.g. to its original shape or state), the resistance applied to the conductive ink material 620 may be reduced. However, an embodiment supported by the present disclosure is not limited thereto.

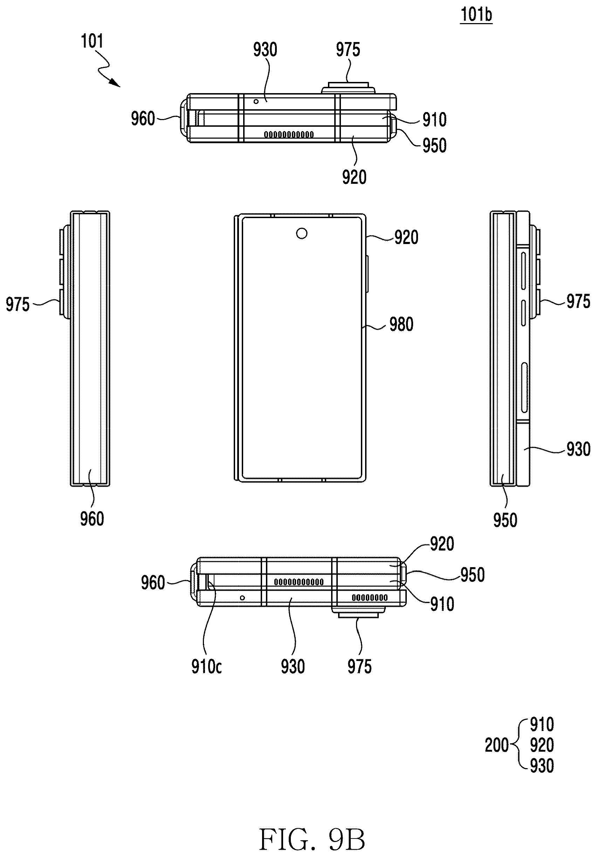

FIG. 9A illustrates an exemplary electronic device in a first state. FIG. 9B illustrates an exemplary electronic device in a second state.

Referring to FIGS. 9A and 9B, an electronic device 101 may include a housing 200, a flexible display 940, a first hinge assembly 950, and a second hinge assembly 960. The housing 200 may include a first housing part 910, a second housing part 920, and a third housing part 930. The housing 200 includes a plurality of housing parts 910, 920, and 930 and may be referred to as a multi-foldable housing in terms of being foldable several times (e.g. having two folding regions, each having a folding axis about which one housing part may fold relative to at least one other housing part). In terms of including the housing 200 and/or the flexible display 940 that are foldable several times, the electronic device 101 may be referred to as a multi-foldable electronic device. However, an embodiment is not limited thereto.

The first housing part 910 may be rotatably coupled to the second housing part 920 by the first hinge assembly 950. The second housing part 920 and the first housing part 910 may be rotated with respect to the first hinge assembly 950. While the first housing part 910 is rotated with respect to the first hinge assembly 950, the second housing part 920 may be rotated with respect to the first hinge assembly 950. For example, when the second housing part 920 and the first housing part 910 are rotated with respect to the first hinge assembly 950, an angular displacement of the second housing part 920 may be substantially the same as an angular displacement of the first housing part 910.

The third housing part 930 may be rotatably coupled to the second housing part 920 by the second hinge assembly 960. The second housing part 920 and the third housing part 930 may be rotated with respect to the second hinge assembly 960. While the second housing part 920 is rotated with respect to the second hinge assembly 960, the third housing part 930 may be rotated with respect to the second hinge assembly 960. For example, when the second housing part 920 and the third housing part 930 rotate with respect to the second hinge assembly 960, the angular displacement (or an angular change) of the second housing part 920 may be substantially the same as an angular displacement of the third housing part 930.

The first hinge assembly 950 and the second hinge assembly 960 may change a state of the electronic device. The first hinge assembly 950 and the second hinge assembly 960 may provide (or enable) a first state 101a of the electronic device 101 (or the first state 101a of the housing 200). The first state 101a of the electronic device 101 (or the first state 101a of the housing 200) may be described as an unfolded state of the electronic device 101 (or the housing 200). In the first state 101a, a front side of the first housing part 910, a front side of the second housing part 920, and a front side of the third housing part 930 may define a front side of the electronic device 101. In the first state 101a, the front side of the first housing part 910, the front side of the second housing part 920, and the front side of the third housing part 930 may face substantially the same direction. In the first state 101a, the electronic device 101 may provide a large display area of the flexible display 940 to a user. For example, when in the first state 101a, the first housing part 910, the second housing part 920 and the third housing part 930, or at least a surface of each (e.g. a front surface), form a plane (e.g. a single flat surface extending across the housing parts).

The first hinge assembly 950 and the second hinge assembly 960 may provide a second state 101b of the electronic device 101 (or the second state 101b of the housing 200). The second state 101b of the electronic device 101 (or the second state 101b of the housing 200) may be described as a multiple folded state of the electronic device 101 (or the housing 200). In the second state 101b, the front side of the first housing part 910 and the front side of the second housing part 920 may face opposite directions, and the front side of the second housing part 920 and the front surface of the third housing part 930 may face opposite directions. In the second state 101b, the front side of the first housing part 910 and the front side of the third housing part 930 may face the same direction. For example, in the second state 101b, the front side of the second housing part 920 may face the front side of the first housing part 910, and the front side of the third housing part 930 may face a rear side of the first housing part 910. In the second state 101b, the electronic device 101 may be folded to improve portability. The second state 101b illustrated in FIG. 9B may be referred to as a G-type fold or G-fold, being representative of the shape formed by the folding of the electronic device 101. It will be appreciated that various embodiments of the present disclosure include electronic devices with three housing parts, as in FIG. 9A, but where the housing parts may be folded such that a Z-type fold (or Z-fold) can be provided. When in a folded state corresponding to a Z-fold, for an electronic device having first, second and third housing parts with the first housing part rotatably connected to one side of the second housing part and the third housing part rotatable connected to an opposite side of the second housing part: a front side of the first housing part faces an opposite direction to a front side of the second housing part (e.g. a rear side of the first housing part is facing a rear side of the second housing part, and they may be in contact with one another); and a front side of the third housing part faces an opposite direction to the front side of the second housing part (e.g. the front side of the third housing part faces the front side of the second housing part, and they may be in contact with one another).

The first hinge assembly 950 and the second hinge assembly 960 may provide a third state of the electronic device 101. The third state of the electronic device 101 may be described as a state in which the electronic device 101 is partially folded and partially unfolded (or a single folded state or a half folded state). For example, in the third state, the front side of the second housing part 920 and the front side of the third housing part 930 may face the same direction, and the front side of the first housing part 910 and the front side of the second housing part 920 may face opposite directions. For example, in the third state, the first housing part 910 and the second housing part 920 may be folded, and the second housing part 920 and the third housing part 930 may be unfolded. For example, in the third state, a first angle between the first housing part 910 and the second housing part 920 may be different to a second angle between the second housing part 920 and the third housing part 930, or the first angle and the second angle may be the same but not take a value of either 0 degrees or 180 degrees.

The flexible display 940 may at least partially define an exterior of the electronic device 101. The flexible display 940 may be partially disposed in the housing 200. The flexible display 940 may define the front side of the electronic device 101. The flexible display 940 may include a first planar portion 941, a second planar portion 942, a third planar portion 943, a first foldable portion 944, and a second foldable portion 945. The first planar portion 941 of the flexible display 940 may be disposed on the front side of the first housing part 910. The second planar portion 942 of the flexible display 940 may be disposed on the front side of the second housing part 920. The third planar portion 943 of the flexible display 940 may be disposed on the front side of the third housing part 930. The first foldable portion 944 of the flexible display 940 may be disposed between the first planar portion 941 and the second planar portion 942 of the flexible display 940. For example, the first foldable portion 944 of the flexible display 940 may be disposed on the first hinge assembly 950 connecting the first housing part 910 and the second housing part 920. The second foldable portion 945 of the flexible display 940 may be disposed between the second planar portion 942 and the third planar portion 943 of the flexible display 940. For example, the second foldable portion 945 of the flexible display 940 may be disposed on the second hinge assembly 960 connecting the second housing part 920 and the third housing part 930.

In the first state 101a, an entire display area of the flexible display 940 may be viewed from a front side of the housing 200. For example, the first planar portion 941, the second planar portion 942, the third planar portion 943, the first foldable portion 944, and the second foldable portion 945 of the flexible display 940 may be visually exposed. The electronic device 101 may provide a large display area including the first planar portion 941, the second planar portion 942, the third planar portion 943, the first foldable portion 944, and the second foldable portion 945 to the user. The display area of the flexible display 940 may not be visible in the second state 101b. For example, the first planar portion 941, the second planar portion 942, the third planar portion 943, the first foldable portion 944, and the second foldable portion 945 of the flexible display 940 may not be visually exposed. In the third state, the display area of the flexible display 940 may be partially visible from the front side of the third housing part 930. For example, the third planar portion 943 may be visually exposed, and the first planar portion 941 and the second planar portion 942 may not be visually exposed.

For a non-limiting example, when the flexible display 940 is used to display a screen in the first state 101a of the electronic device 101, all portions 941, 942, 943, 944, and 945 of the flexible display 940 may be activated. For a non-limiting example, in the second state 101b, all portions 941, 942, 943, 944, and 945 of the flexible display 940 may be deactivated. For a non-limiting example, in the third state of the electronic device 101, when the flexible display 940 is used to display the screen, the third planar portion 943 may be activated and the other portions 941, 942, 944, and 945 of the flexible display 940 may be deactivated. In various examples, instead of a flexible display 940, an individual display is provided for (e.g. covers) each of the first housing part 910, the second housing part 920 and the third housing part 930; while in other examples, a flexible display is provided for (e.g. covers) two of the first housing part 910, the second housing part 920 and the third housing part 930, and another display is provided for (e.g. covers) the remaining one of the first housing part 910, the second housing part 920 and the third housing part 930.

The first hinge assembly 950 and the second hinge assembly 960 may face substantially the same direction as the first planar portion 941 of the flexible display 940, the second planar portion 942 of the flexible display 940, and the third planar portion 943 of the flexible display 940. In the first state 101a, the first foldable portion 944 and the second foldable portion 945 may be disposed on substantially the same horizontal plane as the first planar portion 941, the second planar portion 942, and the third planar portion 943.

The first hinge assembly 950 and the second hinge assembly 960 may provide the second state 101b of the electronic device 101. In the second state 101b, the second planar portion 942 of the flexible display 940 may face the first planar portion 941 of the flexible display 940, and the third planar portion 943 of the flexible display 940 may face the rear side of the first housing part 910. In the second state 101b, the first foldable portion 944 of the flexible display 940 may be folded such that the first planar portion 941 of the flexible display 940 and the second planar portion 942 of the flexible display 940 face different directions. In the second state 101b, the second foldable portion 945 of the flexible display 940 may be folded such that the second planar portion 942 of the flexible display 940 and the third planar portion 943 of the flexible display 940 face different directions.

In the second state 101b, the first housing part 910 may be disposed between the second housing part 920 and the third housing part 930. In the second state 101b, the second foldable portion 945 of the flexible display 940 disposed on the second hinge assembly 960 may partially face a side surface 910c of the first housing part 910. For example, in order to provide visual information to the user in the second state 101b, a sub-display 980 may be additionally disposed on a rear side of the second housing part 920. For example, in the second state 101b, the sub-display 980 may be configured to provide the visual information to the user instead of the flexible display 940. For example, a camera 975 may be partially protruded or exposed through a rear side of the third housing part 930 to obtain an image regardless of a change in the state of the electronic device 101. For example, in the first state 101a, the flexible display 940 may be configured to display visual information related to the image through the flexible display 940 using the image obtained through the camera 975. For example, in the second state 101b, the sub-display 980 may be configured to display the visual information related to the image through the sub-display 980, using the image obtained through the camera 975. However, the embodiment supported by the present disclosure is not limited thereto.

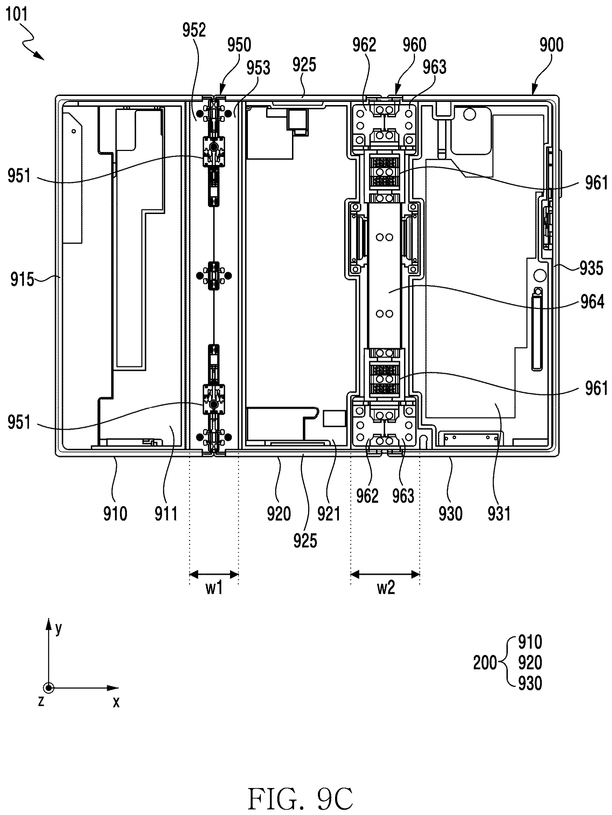

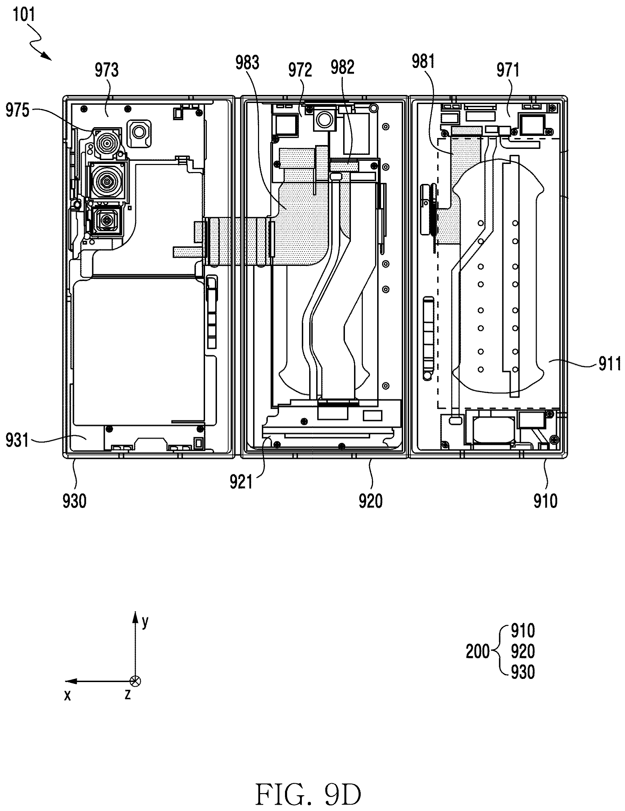

FIG. 9C is a top plan view of an exemplary electronic device in a first state from which a flexible display is removed. FIG. 9D is a rear view of an exemplary electronic device in a first state from which a rear cover is removed.

Referring to FIGS. 9C and 9D, the electronic device 101 may include the first hinge assembly 950 and the second hinge assembly 960. A first width w1 of the first hinge assembly 950 may be narrower than a second width w2 of the second hinge assembly 960. A difference between the first width w1 of the first hinge assembly 950 and the second width w2 of the second hinge assembly 960 may be greater than or equal to a thickness of the first housing part 910. For example, the second hinge assembly 960 may have the second width w2 wider than the first width w1 such that the first housing part 910 is disposed between the second housing part 920 and the third housing part 930 according to the second state 101b. The first hinge assembly 950 may be referred to as a narrow hinge structure in terms of having a narrower width than the second hinge assembly 960. The second hinge assembly 960 may be referred to as a wide hinge structure in terms of having a wider width than the first hinge assembly 950.

The first hinge assembly 950 may include a first set 951 of gears, a first hinge plate 952, and a second hinge plate 953. The first hinge plate 952 may be coupled to a first supporting portion 911 of the first housing part 910. The second hinge plate 953 may be coupled to a second supporting portion 921 of the second housing part 920. Gears included in the first set 951 of the gears may be configured to rotate the first hinge plate 952 and the second hinge plate 953. For example, the gears included in the first set 951 of the gears may rotate the second hinge plate 953 (or the second housing part 920) in conjunction with the rotation of the first hinge plate 952 (or the first housing part 910). After the first hinge plate 952 (or the first housing part 910) is rotated, the gears included in the first set 951 of the gears may be rotated according to the rotation of the first hinge plate 952 (or the first housing part 910). The second hinge plate 953 (or the second housing part 920) may be rotated in conjunction with the rotation of the first hinge plate 952 according to the rotation of the gears included in the first set 951 of the gears.

The second hinge assembly 960 may include a second set 961 of gears, a third hinge plate 962, a fourth hinge plate 963, and a supporting plate 964. The third hinge plate 962 may be coupled to the second supporting portion 921 of the second housing part 920. The fourth hinge plate 963 may be coupled to the third supporting portion 931 of the third housing part 930. Gears included in the second set 961 of the gears may be configured to rotate the third hinge plate 962 and the fourth hinge plate 963. For example, the gears included in the second set 961 of the gears may rotate the fourth hinge plate 963 (or the third housing part 930) in conjunction with the rotation of the third hinge plate 962 (or the second housing part 920). After the third hinge plate 962 (or the second housing part 920) is rotated, the gears included in the second set 961 of the gears may be rotated according to the rotation of the third hinge plate 962 (or the second housing part 920). The fourth hinge plate 963 (or the third housing part 930) may be rotated in conjunction with the rotation of the third hinge plate 962 according to the rotation of the gears included in the second set 961 of the gears.

The electronic device 101 may include a first printed circuit board 971, a second printed circuit board 972, and a third printed circuit board 973. Various hardware components may be mounted on each of the printed circuit boards 971, 972, and 973.

The first printed circuit board 971 may be disposed on the first supporting portion 911 of the first housing part 910. A hardware component within the first housing part 910 may be disposed on the first printed circuit board 971. The second printed circuit board 972 may be disposed on the second supporting portion 921 of the second housing part 920. A hardware component within the second housing part 920 may be disposed on the second printed circuit board 972. The third printed circuit board 973 may be disposed on the third supporting portion 931 of the third housing part 930. A hardware component (e.g., the rear camera 975) within the third housing part 930 may be disposed on the third printed circuit board 973.

The hardware component disposed on the first printed circuit board 971 may support or independently operate the hardware component disposed on the second printed circuit board 972 and/or the hardware component disposed on the third printed circuit board 973.

The hardware component disposed on the second printed circuit board 972 may support or independently operate the hardware component disposed on the first printed circuit board 971 or the third printed circuit board 973. The hardware component disposed on the second printed circuit board 972 may include a speaker, a front camera and/or a display driving circuit.

The hardware component disposed on the third printed circuit board 973 may include at least one processor including processing circuitry, memory including one or more storage media, communication circuitry, and the rear camera 975. The rear camera 975 may be exposed through a structure (e.g., an opening) of the rear side of the third housing part 930.

The electronic device 101 may further include batteries. Each of the batteries may be attached to the supporting portions 911, 921, and 931 included in the housing parts 910, 920, and 930. The supporting portions 911, 921, and 931 may support rechargeable batteries.

The housing 200 may include frames 915, 925, and 935. For example, the frames 915, 925, and 935 may form a periphery of the electronic device 101 in the first state 101a. For example, the first housing part 910 may include the first frame 915 at least partially surrounding the first supporting portion 911. The second housing part 920 may include the second frame 925 at least partially surrounding the second supporting portion 912. The third housing part 930 may include the third frame 935 at least partially surrounding the third supporting portion 913. The second frame 925 may be positioned between the first frame 915 and the third frame 935 in the first state 101a of the electronic device 101. The frames 915, 925, and 935 may be referred to as a peripheral portion and/or a deco of the housing 200 in terms of being disposed along the periphery of the electronic device 101 to protect a periphery of the flexible display 940, but an embodiment supported by the present disclosure is not limited thereto.

The first housing part 910 and the third housing part 930 are indicated to rotate in an opposite direction with respect to the second housing part 920, but are not limited thereto. For example, while changing from the first state 101a to the second state 101b, the first housing part 910 may rotate counterclockwise with respect to the second housing part 920, and the third housing part 930 may rotate counterclockwise with respect to the second housing part 920. As the first housing part 910 and the third housing part 930 rotate in the same direction, a portion of a display area of the flexible display 940 may be visually exposed within the second state 101b. However, the embodiment supported by the present disclosure is not limited to this, and for example, while changing from the first state 101a to the second state 101b, the first housing part 910 may rotate clockwise with respect to the second housing part 920, and the third housing part 930 may rotate counterclockwise with respect to the second housing part 920.

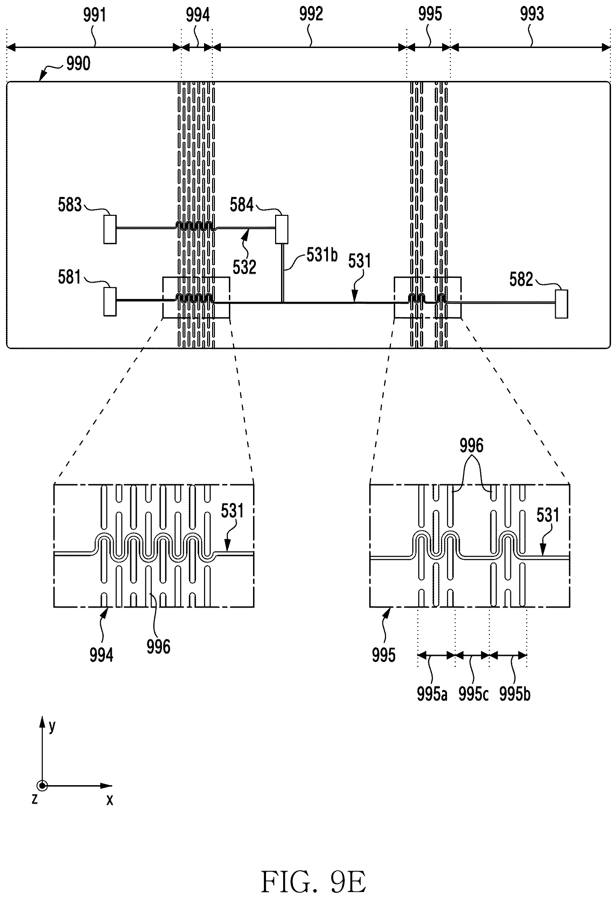

FIG. 9E is a top plan view of a substrate disposed in the exemplary electronic device of FIGS. 9A to 9D.

Referring to FIG. 9E, a substrate 990 may include a first substrate portion 991, a second substrate portion 992, a third substrate portion 993, a fourth substrate portion 994, and a fifth substrate portion 995.

When referring to FIGS. 9A to 9D together, the first substrate portion 991 may be disposed under the first planar portion 941 of the flexible display 940. The second substrate portion 992 may be disposed under the second planar portion 942 of the flexible display 940. The third substrate portion 993 may be disposed under the third planar portion 943 of the flexible display 940. Since the substrate portions 991, 992, and 993 support the planar portions 941, 942, and 943, respectively, they may be portions of the substrate 990 that are not deformed.

The fourth substrate portion 994 may be disposed under the first foldable portion 944 of the flexible display 940. The fifth substrate portion 995 may be disposed under the second foldable portion 945 of the flexible display 940. Since the substrate portions 994 and 995 support the foldable portions 944 and 945, respectively, they may be portions of the substrate 990 that is deformable. For example, each of the substrate portions 944 and 945 may include a plurality of holes 996. For example, since a width of the second foldable portion 945 supported by the fifth substrate portion 995 is greater than a width of the first foldable portion 944 supported by the fourth substrate portion 994, the substrate portion 995 may include a portion 995c having a continuous surface between portions 995a and 995b in which the plurality of holes 996 are formed without the plurality of holes 996. However, an embodiment supported by the present disclosure is not limited thereto.

For example, a conductive line 531 may extend from the first substrate portion 991 to the third substrate portion 993, across the fourth substrate portion 994, the second substrate portion 992, and the fifth substrate portion 995. The conductive line 531 may cross the fourth portion 994 and the fifth portion 995 by detouring closely around (e.g. by being formed in-between) the plurality of holes 996 formed in the fourth substrate portion 994 and the fifth substrate portion 995. For example, a first terminal 581 disposed in the first substrate portion 991 and a second terminal 582 disposed in the third substrate portion 993 may be connected to each other through the conductive line 531. The conductive line 531 may be an electrical wire for high-speed data transmission for the flexible display 940, but it is not limited thereto.

For example, a conductive line 532 may extend from the first substrate portion 991 to the second substrate portion 992 across the fourth substrate portion 994. The conductive line 532 may cross the fourth substrate portion 994 by detouring closely around the plurality of holes 996 formed in the fourth substrate portion 994. For example, a third terminal 583 disposed in the first substrate portion 991 and a fourth terminal 584 disposed in the second substrate portion 992 may be connected to each other through the conductive line 532. The conductive line 532 may be a power line of a battery (e.g., the battery 189 of FIG. 1) of the electronic device 101, but the embodiment supported by the present disclosure is not limited thereto.

For example, a portion 531b of the conductive line 531 may be branched from the conductive line 531 within the second substrate portion 992. The portion 531b may extend, for example, from the conductive line 531 to the fourth terminal 584 disposed on the second substrate portion 932. However, the embodiment supported by the present disclosure is not limited thereto, and the electronic device 101 may include a plurality of conductive lines that cross the substrate portions 994 and 995 by detouring closely around the plurality of holes 996.

For example, configurations and/or structures (e.g., the plurality of layers 500, the conductive line 530, the coating material 540, the conductive material 610, the conductive ink material 620, the plurality of conductive vias 630, the shielding film 640, the protection film 650, and the adhesive layer 660) disposed on the substrate 510 that are exemplarily illustrated and described in FIG. 6 to FIG. 8, may be applied substantially the same as or similarly to the substrate portions 994 and 995 of the substrate 990 exemplarily illustrated and described in FIG. 9E. However, the embodiment supported by the present disclosure is not limited thereto.

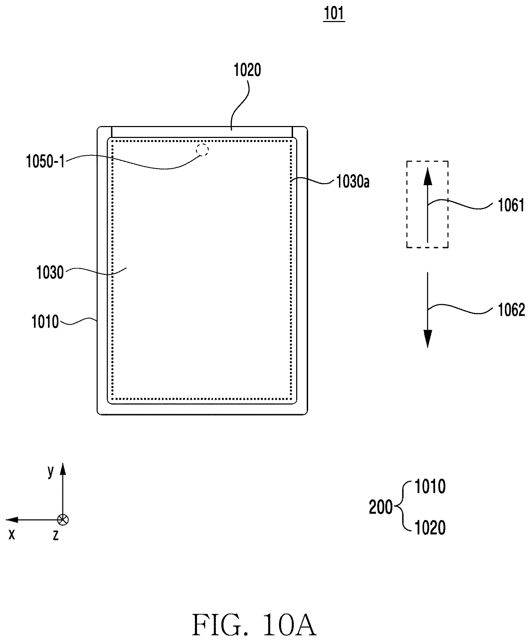

FIG. 10A is a top plan view of an electronic device in a retracted state.

Referring to FIG. 10A, an electronic device 101 may include a housing 200 including a first housing part 1010 and a second housing part 1020 movable with respect to the first housing part 1010 in a first direction 1061 that is parallel to a y-axis or in a second direction that is parallel to the y-axis and is opposite to the first direction 1061, and a flexible display 1030.

For example, the electronic device 101 may be in the retracted state. For example, in the retracted state, the second housing part 1020 may be movable with respect to the first housing part 1010 in the first direction 1061 of the first direction 1061 and the second direction 1062. For example, in the retracted state, the second housing part 1020 may not be movable with respect to the first housing part 1010 in the second direction 1062 opposite to the first direction 1061.

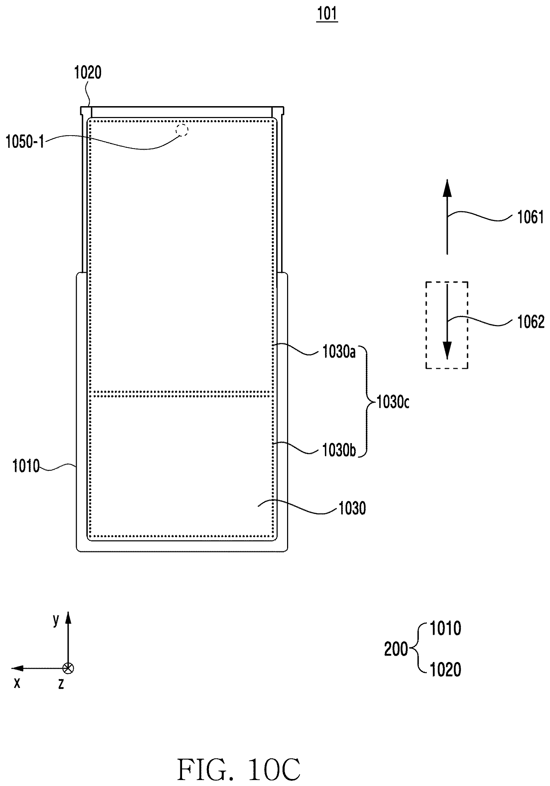

For example, in the retracted state, the flexible display 1030 may provide a display area having the smallest size. For example, in the retracted state, the display area may correspond to an area 1030a. For example, although not illustrated in FIG. 10A, in the retracted state, an area (e.g., an area 1030b of FIG. 10C) of the flexible display 1030 different from the area 1030a that is the display area, may be positioned in the first housing part 1010. For example, in the retracted state, the area (e.g., the area 1030b of FIG. 10C) may be covered by the first housing part 1010. For example, in the retracted state, the area (e.g., the area 1030b of FIG. 10C) may be rolled into the first housing part 1010. For example, in the retracted state, the area 1030a may include a planar portion, unlike the area (e.g., the area 1030b of FIG. 10C) that includes a curved portion. However, it is not limited thereto. For example, in the retracted state, the area 1030a may include the curved portion extending from the planar portion and positioned within an edge portion.

For example, the retracted state may be referred to as a slide-in state or a closed state in terms of at least a portion of the second housing part 1020 being positioned in the first housing part 1010.

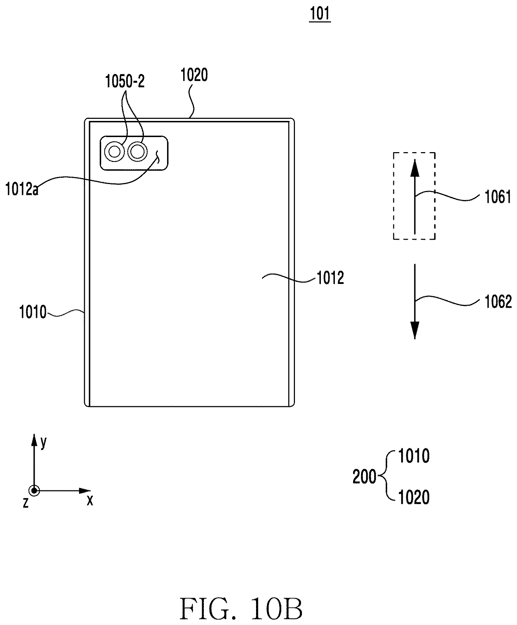

For example, the first housing part 1010 may include a first image sensor 1050-1 within a camera module (e.g., the camera module 180 of FIG. 1), visually exposed through a portion of the area 1030a and parallel to a z-axis. For example, the camera module 180 may be disposed to perform its function without being visually exposed through the portion of the area 1030a in an inner space of the electronic device. For example, although not illustrated in FIG. 10A, the second housing part 1020 may include one or more second image sensors within the camera module 180, exposed through a portion of the second housing part 1020 and parallel to the z-axis. For example, the one or more second image sensors may be exemplified through a description of FIG. 10B.

FIG. 10B is a bottom view of an exemplary electronic device in a retracted state.

Referring to FIG. 10B, in the retracted state, one or more second image sensors 1050-2 disposed in the second housing part 1020 may be positioned within a structure disposed in the first housing part 1010 for the one or more second image sensors 1050-2.

For example, in the retracted state, light from the outside of the electronic device 101 may be received to the one or more second image sensors 1050-2 through the structure. For example, since the one or more second image sensors 1050-2 are positioned within the structure in the retracted state, the one or more second image sensors 1050-2 may be exposed through the structure in the retracted state. For example, the structure may be implemented in various ways. For example, the structure may be an opening or a notch. For example, the structure may be an opening 1012a in a plate 1012 of the first housing part 1010 surrounding at least a portion of the second housing part 1020. However, it is not limited thereto. For example, in the retracted state, the one or more second image sensors 1050-2 included in the second housing part 1020 may be covered by the plate 1012 of the first housing part 1010.

Referring back to FIG. 10A, the retracted state may be changed to the extended state.

For example, the retracted state (or the extended state) may be changed to the extended state (or the retracted state) through one or more intermediate states between the retracted state and the extended state.

For example, the retracted state (or the extended state) may be changed to the extended state (or the retracted state) based on a defined user input. For example, the retracted state (or the extended state) may change to the extended state (or the retracted state) in response to a user input to a physical button exposed through a portion of the first housing part 1010 or a portion of the second housing part 1020. For example, the retracted state (or the extended state) may be changed to the extended state (or the retracted state) in response to a touch input to an executable object displayed in the display area. For example, the retracted state (or the extended state) may be changed to the extended state (or the retracted state) in response to a touch input that has a contact point on the display area and has a pressing intensity greater than or equal to a reference intensity. For example, the retracted state (or the extended state) may be changed to the extended state (or the retracted state) in response to a voice input received through a microphone of the electronic device 101. For example, the retracted state (or the extended state) may change to the extended state (or the retracted state) in response to an external force applied to the first housing part 1010 and/or the second housing part 1020 to move the second housing part 1020 with respect to the first housing part 1010. For example, the retracted state (or the extended state) may be changed to the extended state (or the retracted state) in response to a user input identified on an external electronic device (e.g., earbuds or a smart watch) connected to the electronic device 101. However, it is not limited thereto.

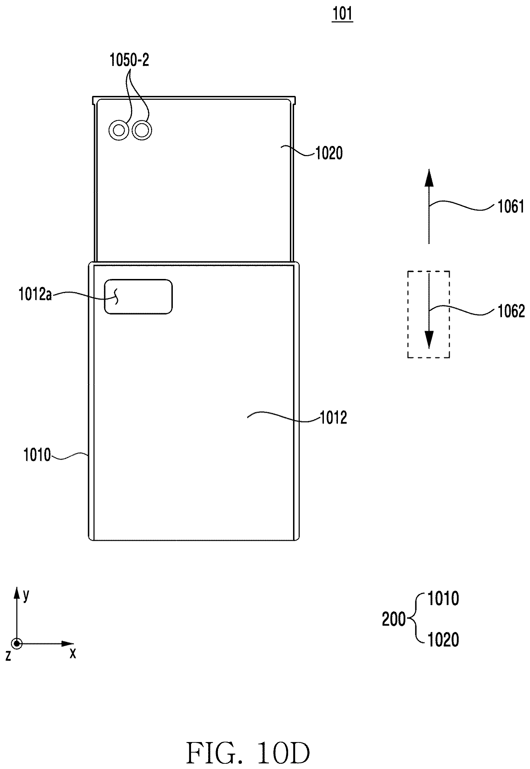

The extended state may be exemplified through a description of FIGS. 10C and 10D.

FIG. 10C is a top plan view of an electronic device in an extended state.

Referring to FIG. 10C, the electronic device 101 may be in the extended state. For example, in the extended state, the second housing part 1020 may be movable with respect to the first housing part 1010 in the second direction 1062 of the first direction 1061 and the second direction 1062. For example, in the extended state, the second housing part 1020 may not be movable with respect to the first housing part 1010 in the first direction 1061 opposite to the second direction 1062.

For example, in the extended state, the flexible display 1030 may provide the display area having the largest size. For example, in the extended state, the display area may correspond to an area 1030c including the area 1030a and the area 1030b. For example, the area 1030b positioned in the first housing part 1010 in the reduced state may be exposed outside the first housing 1010 in the extended state. For example, in the extended state, the area 1030a may include a planar portion. However, it is not limited thereto. For example, the area 1030a may include a curved portion extending from the planar portion and positioned within the edge portion. For example, in the extended state, the area 1030b may include a planar portion of the planar portion of a curved portion, unlike the area 1030a in the retracted state. However, it is not limited thereto. For example, the area 1030b may include a curved portion extending from the planar portion of the area 1030b and positioned within the edge portion.

For example, the flexible display 1030 may include the area 1030a disposed on the second housing part 1020, and the area 1030b that extends from the area 1030a and is at least partially inserted into the first housing part 1010 or visually exposed to the outside of the electronic device 101 according to movement of the second housing part 1020 with respect to the first housing part 1010. For example, the area 1030a may be a portion of the flexible display 1030 that is visually exposed to the outside of the electronic device 101. The region 1030a may be a portion that is not deformed according to the movement of the second housing part 1020 with respect to the first housing part 1010. For example, the area 1030b may be a portion of the flexible display 1030 that is deformed along the second housing part 1020 moving with respect to the first housing part 1010. The flexible display 1030 may be referred to as a rollable display in terms of including the rollable area 1030b, but it is not limited thereto.

For example, the extended state may be referred to as a slide-out state or an open state in terms of at least a portion of the second housing part 1020 being positioned outside the first housing part 1010. For example, the extended state may be referred to as the extended state in terms of providing the display area having the largest size. However, it is not limited thereto.

For example, when a state of the electronic device 101 changes from the retracted state to the extended state, the first image sensor 1050-1 may move along with the area 1030a according to the movement of the second housing part 1020 in the second direction 1062. For example, although not illustrated in FIG. 10C, the one or more second image sensors 1050-2 may be moved according to the movement of the second housing part 1020 in the second direction 1062 when the state of the electronic device 101 changes from the retracted state to the extended state. For example, a relative positional relationship between the one or more second image sensors 1050-2 and the structure in the first housing part 1010 illustrated by a description of FIG. 10B may change according to the movement of the one or more second image sensors 1050-2. For example, the change in the relative positional relationship may be illustrated through FIG. 10D.

FIG. 10D is a bottom view of an exemplary electronic device in an extended state.

Referring to FIG. 10D, in the extended state, the one or more second image sensors 1050-2 may be positioned outside the structure (e.g., the opening or the notch) in the first housing part 1010 illustrated through the description of FIG. 10B. For example, in the extended state, the one or more second image sensors 1050-2 may be positioned outside the opening 1012a in the plate 1012. For example, the one or more second image sensors 1050-2 may be exposed through the opening 1012a in the retracted state. The one or more second image sensors 1050-2 may be exposed by being positioned outside the opening 1012a in the extended state. For example, since the one or more second image sensors 1050-2 are positioned outside the structure in the extended state, the relative positional relationship between the one or more second image sensors 1050-2 in the extended state and the structure in the first housing part 1010 illustrated by the description of FIG. 10B may be different from the relative positional relationship in the retracted state.

For example, in case that the electronic device 101 does not include the structure such as the opening 1012a, the one or more second image sensors 1050-2 in the retracted state may not be exposed to the outside of the housing, but in the extended state, the one or more second image sensors 1050-2 may be exposed to the outside of the housing 200.

Although not illustrated in FIGS. 10A, 10B, 10C, and 10D, the electronic device 101 may be in an intermediate state between the retracted state and the extended state. For example, a size of the display area of the flexible display 1030 in the intermediate state may be larger than a size of the display area in the reduced state and smaller than a size of the display area in the extended state. For example, the display area in the intermediate state may correspond to an area including the area 1030a and a portion of the area 1030b. For example, in the intermediate state, the portion of the area 1030b may be exposed, and another portion (or a remaining portion) of the area 1030b may be covered by the first housing part 1010 or rolled into the first housing part 1010. However, it is not limited thereto.

As described above, a foldable electronic device (e.g., the electronic device 101 of FIG. 1) may comprise a flexible display (e.g., the display 230 of FIG. 2A) including a first display portion (e.g., the first display portion 231 of FIG. 2A), a second display portion (e.g., the second display portion 232 of FIG. 2A), and a third display portion (e.g., the third display portion 233 of FIG. 2A), configured to be bent when the foldable electronic device is in a folded state, extending from the first display portion to the second display portion. The foldable electronic device may comprise a printed circuit board (PCB) (e.g., the printed circuit board 510 of FIG. 5A), supporting the flexible display, including a first portion (e.g., the first portion 511 of FIG. 5A) corresponding to the first display portion, a second portion (e.g., the second portion 512 of FIG. 5A) corresponding to the second display portion, a third portion (e.g., the third portion 513 of FIG. 5A), corresponding to the third display portion, including surfaces defining holes (e.g., the plurality of holes 520 of FIG. 5A), and an electrical wire (e.g., the conductive line 530 of FIG. 5B, or the first conductive line 531 of FIG. 6), extending from the first portion to the second portion, across the third portion of the PCB by detouring closely around at least some of the holes. The foldable electronic device may include a conductive material (e.g., the conductive material 610 of FIG. 6), plated on the surfaces of the third portion of the PCB, electrically isolated from the electrical wire.

For example, the foldable electronic device may further include a conductive ink material (e.g., the conductive ink material 620 of FIG. 6), filled in the holes together with the conductive material, being in contact with the conductive material.

For example, the conductive ink material may have elasticity and attached to the conductive material such that the conductive ink material provides an elastic support to the third portion of the PCB in the folded state of the foldable electronic device.

For example, the conductive ink material and the conductive material may be electrically connected to a ground of the PCB to shield a portion of the electrical wire across the third portion of the PCB through the ground of the PCB.

For example, the foldable electronic device may further comprise a first terminal (e.g., the first terminal 581 of FIG. 5A), disposed at the first portion of the PCB, connected to the electrical wire, and a second terminal (e.g., the second terminal 582 of FIG. 5A), disposed at the second portion of the PCB, connected to the electrical wire. The first terminal and the second terminal may be electrically connected to each other through the electrical wire.

For example, the foldable electronic device may further comprise a shielding film (e.g., the shielding film 640 of FIG. 7A), attached at least partially on the third portion to shield the electrical wire together with the conductive material through a ground electrically connected to the conductive material, covering the holes.

For example, the foldable electronic device may further comprise a protection film (e.g., the protection film 650 of FIG. 7A), attached on the shielding film. The shielding film and the protection film may be having elasticity.

For example, the PCB may further include another electrical wire (e.g., the other conductive line 532 of FIG. 6), extending from the first portion, across the third portion, to the second portion, disposed adjacent to the electrical wire to detour closely around at least some of the holes.

For example, the PCB may further include a plurality of conductive vias (e.g., the plurality of conductive vias 630 of FIG. 6), at least partially penetrating the PCB, disposed between the electrical wire and the other electrical wire.

For example, the PCB may further include insulation layers (e.g., the plurality of layers 500 of FIG. 5B). The electrical wire may be interposed between the insulation layers to be disposed in the PCB.

For example, the insulation layers may be formed from graphite and provide a heat conduction path between the first portion and the second portion across the third portion for heat generated from the electrical wire.

For example, the holes may include a first hole (e.g., the first hole 521 of FIG. 6), and a second hole (e.g., the second hole 522 of FIG. 6) disposed adjacent to the first hole. A distance (e.g., the d1 of FIG. 6) between the first hole and a portion of the electrical wire disposed between the first hole and the second hole may correspond to a distance (e.g., the d2 of FIG. 6) between the second hole and the portion of the electrical wire.

For example, the third portion of the PCB may further include a supporting portion (e.g., the bendable portions 513d and 513e of FIG. 5A) without the holes to have a continuous surface.

For example, the foldable electronic device may further comprise a foldable housing (e.g., the foldable housing 200 of FIG. 2A) including a first housing part (e.g., the first housing part 210 of FIG. 2A) coupled to the first display portion and a second housing part (e.g., the second housing part 220 of FIG. 2A) coupled to the second display portion, a hinge assembly (e.g., the hinge structure 250 of FIG. 2C), rotatably coupling the first housing part and the second housing part, configured to deform the third display portion.

For example, the foldable electronic device may further comprise wireless communication circuitry (e.g., the wireless communication module 192 of FIG. 1). The electrical wire may be used to transmit signals from the wireless communication circuitry to an external electronic device (e.g., the electronic device 101 of FIG. 1).

As described above, an electronic device may comprise a flexible display including a deformable portion configured to be bent, a PCB, supporting the flexible display, including holes disposed under the display portion of the flexible display, a conductive line, disposed in the PCB, at least partially detouring closely around at least some of the holes, a conductive material plated on an inner surface of each hole of the holes, and a conductive ink material, filled in the holes together with the conductive material, attached to the conductive material.

For example, the conductive ink material of the electronic device has elasticity to provide an elastic support to the PCB in a state of which the deformable portion is at least partially bent.

For example, the conductive ink material and the conductive material may be electrically connected to a ground of the PCB to shield to a portion of the conductive line adjacent to the at least some of the holes through the ground of the PCB.

For example, the holes may include a first hole, and a second hole disposed to be adjacent to the first hole. A distance between the first hole and a portion of the conductive line disposed between the first hole and the second hole may correspond to a distance between the second hole and the portion of the conductive line.

For example, the PCB may further include insulation layers formed from graphite.

As described above, a foldable electronic device (e.g., the electronic device 101 of FIG. 1) may comprise a flexible display (e.g., the display 230 of FIG. 2A) including a first display portion (e.g., the first display portion 231 of FIG. 2A), a second display portion (e.g., the second display portion 232 of FIG. 2A), and a third display portion (e.g., the third display portion 233 of FIG. 2A), configured to be bent, extending from the first display portion to the second display portion. The foldable electronic device may include a substrate (e.g., the substrate 510 of FIG. 5A) disposed under the flexible display, including a first portion (e.g., the first portion 511 of FIG. 5A), aligned with respect to the first display portion, a second portion (e.g., the second portion 512 of FIG. 5A) aligned with respect to the second display portion, and a third portion (e.g., the third portion 513 of FIG. 5A) aligned with the third display portion, including a plurality of holes (e.g., the plurality of holes 520 of FIG. 5A). The foldable electronic device may include a conductive line (e.g., the conductive line 530 of FIG. 5B and the first conductive line 531 of FIG. 6) disposed on the substrate, extending from the first portion to the second portion across the third portion, and disposed adjacent to the plurality of holes to detour around the plurality of holes on the third portion. The foldable electronic device may include a conductive material (e.g., the conductive material 610 of FIG. 6) plated on an inner surface of each hole of the plurality of holes to shield the conductive line.

For example, the foldable electronic device may further include a conductive ink material (e.g., the conductive ink material 620 of FIG. 6) filled in the plurality of holes, in contact with the conductive material, to shield the conductive line together with the conductive material.

For example, the conductive ink material may provide elastic support to the third portion of the substrate in a folded state of the foldable electronic device by being elastically attached to the conductive material.

For example, the conductive material may be plated on the third portion such that the conductive material surrounds the conductive line.

For example, the conductive material may include a first conductive portion (e.g., the first conductive portion 611 of FIG. 7A) plated on a first surface facing the flexible display of the substrate, a second conductive portion (e.g., the second conductive portion 612 of FIG. 7A) plated on the second surface opposite to the first surface of the substrate, and a third conductive portion (e.g., the third conductive portion 613 of FIG. 7A) plated on the inner surface of each of the holes, extending from the first conductive portion to the second conductive portion.

For example, the foldable electronic device may further include a shielding film (e.g., the shielding film 640 of FIG. 7A), attached at least partially on the third portion to shield the conductive line together with the conductive material, covering the plurality of holes.

For example, the foldable electronic device may further include a protection film (e.g., the protection film 650 of FIG. 7A) attached on the shielding film. The shielding film and the protection film may have elasticity.

For example, the foldable electronic device may further include another conductive line (e.g., the other conductive line 532 of FIG. 6), disposed on the substrate, extending from the first portion to the second portion across the third portion, and disposed adjacent to the conductive line to detour around the plurality of holes on the third portion.

For example, the substrate may further include a plurality of conductive vias (e.g., the plurality of conductive vias 630 of FIG. 6) at least partially penetrating the substrate, disposed between the conductive line and the other conductive line.

For example, the substrate may further include a plurality of layers (e.g., the plurality of layers 500 of FIG. 5B). The conductive line may be disposed between two of the plurality of layers.

For example, the substrate may further include a coating material (e.g., the adhesive layer 660 of FIG. 7A) surrounding the conductive line, at least partially infiltrated between the plurality of layers.

For example, the plurality of holes may include a first hole (e.g., the first hole 521 of FIG. 6) and a second hole (e.g., the second hole 522 of FIG. 6) disposed adjacent to the first hole. A distance (e.g., the d1 of FIG. 6) between the first hole and a portion of the conductive line disposed between the first hole and the second hole may correspond to a distance (e.g., the d2 of FIG. 6) between the second hole and the portion of the conductive line.

For example, the third portion of the substrate may further include a supporting portion (e.g., the bendable portions 513d and 513e of FIG. 5A) without the plurality of holes to have a continuous surface.

For example, the foldable electronic device may further comprise a foldable housing (e.g., the housing 200 of FIG. 2A) including a first housing part (e.g., the first housing part 210 of FIG. 2A) coupled to the first display portion, a second housing part (e.g., the second housing part 220 of FIG. 2A) coupled to the second display portion, and a hinge assembly (e.g., the hinge structure 250 of FIG. 2C), rotatably coupling the first housing part and the second housing part, configured to deform the third display portion.

For example, the foldable electronic device may further comprise wireless communication circuitry. The conductive line may be used to transmit signals from the wireless communication circuitry (e.g., the wireless communication module 192 of FIG. 1) to an external electronic device (e.g., the electronic device 101 of FIG. 1).

As described above, an electronic device may comprise a flexible display including a deformable portion (e.g., the third display portion 233 of FIG. 2A) configured to be bent. The electronic device may comprise a substrate, supporting the flexible display, including a plurality of holes disposed under the deformable portion. The electronic device may include a conductive line, formed on the substrate, disposed adjacent to the plurality of holes to at least partially detour around the plurality of holes. The electronic device may include a conductive material plated on an inner surface of each hole of the plurality of holes, and a conductive ink material filled in the plurality of holes together with the conductive material. The conductive material and the conductive ink material may be configured to shield the conductive line detouring around the plurality of holes.

For example, the conductive ink material may provide elastic support to the substrate in a state in which the deformation portion is at least partially bent, by being elastically attached to the conductive material.

For example, the conductive material may include a first conductive portion plated on a first surface facing the flexible display of the substrate, a second conductive portion plated on a second surface opposite to the first surface of the substrate, and a third conductive portion, plated on the inner surface of each hole of the plurality of holes, extending from the first conductive portion to the second conductive portion.

The electronic device may further comprise a shielding film, attached on the substrate to shield the conductive line together with the conductive material and the conductive ink material, covering the conductive ink material.

For example, the substrate may further comprise a plurality of layers and a coating material, surrounding the plurality of layers, forming an outer surface of the substrate.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," or "connected with" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between a case in which data is semi-permanently stored in the storage medium and a case in which the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

It will also be appreciated that certain aspects and embodiments of the disclosure provide subject-matter in accordance with the following numbered paragraphs:

Paragraph 1. A foldable electronic device comprising: a flexible display including: a first display portion, a second display portion, and a third display portion, configured to be deformed when the foldable electronic device is in a folded state, and to extend from the first display portion to the second display portion; a printed circuit board, PCB, configured to support the flexible display, the PCB including: a first portion corresponding to the first display portion, a second portion corresponding to the second display portion, a third portion corresponding to the third display portion, wherein a plurality of holes are formed in a first region of the third portion, and a first electrical wire configured to extend from the first portion of the PCB to the second portion of the PCB via the third portion of the PCB such that the first electrical wire passes in-between a first number of the plurality of holes; and conductive material disposed on inner surfaces of the plurality of holes and electrically isolated from the first electrical wire.

Paragraph 2. The foldable electronic device of Paragraph 1, wherein a conductive ink material is provided in each hole of the plurality of holes to be in contact with the conductive material disposed on the inner surface of said hole.

Paragraph 3. The foldable electronic device of Paragraph 2, wherein the conductive ink material provided in each hole of the plurality of holes has elasticity and is attached to the conductive material disposed on the inner surface of said hole.

Paragraph 4. The foldable electronic device of Paragraph 2 or Paragraph 3, wherein the conductive ink material and the conductive material are electrically connected to a ground of the PCB to shield a portion of the electrical wire across the third portion of the PCB through the ground of the PCB.

Paragraph 5. The foldable electronic device of any one of Paragraphs 1 to 4, further comprising: a first terminal, disposed at the first portion of the PCB, connected to the electrical wire; and a second terminal, disposed at the second portion of the PCB, connected to the electrical wire, wherein the first terminal and the second terminal are electrically connected to each other through the electrical wire.

Paragraph 6. The foldable electronic device of any one of Paragraphs 1 to 5, further comprising a shielding film provided at least partially on the third portion to shield the electrical wire.

Paragraph 7. The foldable electronic device of Paragraph 6, further comprising a protection film provided on the shielding film, wherein the shielding film and the protection film have elasticity.

Paragraph 8. The foldable electronic device of any one of Paragraphs 1 to 7, wherein the PCB includes another electrical wire configured to extend from the first portion of the PCB to the second portion of the PCB via the third portion of the PCB, and wherein the other electrical wire is provided between a second number of the plurality of holes, and a portion of the other electrical wire is disposed adjacent to a portion of the electrical wire.

Paragraph 9. The foldable electronic device of Paragraph 8, wherein the PCB further includes a plurality of conductive vias, at least partially penetrating the PCB, disposed between the portion of the electrical wire and the portion of the other electrical wire.

Paragraph 10. The foldable electronic device of any one of Paragraphs 1 to 9, wherein the PCB further includes insulation layers, and wherein the electrical wire is interposed between the insulation layers.

Paragraph 11. The foldable electronic device of Paragraph 10, wherein the insulation layers are formed from graphite.

Paragraph 12. The foldable electronic device of any one of Paragraphs 1 to 11, wherein the plurality of holes include: a first hole, and a second hole disposed adjacent to the first hole, wherein a first distance between the first hole and a section of the electrical wire disposed between the first hole and the second hole corresponds to a second distance between the second hole and the section of the electrical wire.

Paragraph 13. The foldable electronic device of any one of Paragraphs 1 to 12, wherein the third portion of the PCB further includes another region, different to the region, configured to support the third display portion.

Paragraph 14. The foldable electronic device of any one of Paragraphs 1 to 13, further comprising: a foldable housing including a first housing part coupled to the first display portion and a second housing part coupled to the second display portion; and a hinge assembly configured to rotatably couple the first housing part and the second housing part and to deform the third display portion.

Paragraph 15. The foldable electronic device of any one of Paragraphs 1 to 14, further comprising wireless communication circuitry, wherein the electrical wire is used to transmit and/or receive signals from the wireless communication circuitry to an external electronic device.

## Claims

1. A foldable electronic device comprising:
a flexible display including:
a first display portion,
a second display portion, and
a third display portion, configured to be bent when the foldable electronic device is in a folded state, extending from the first display portion to the second display portion;
a printed circuit board, PCB, configured to support the flexible display, the PCB including:
a first portion corresponding to the first display portion,
a second portion corresponding to the second display portion,
a third portion corresponding to the third display portion, wherein a plurality of holes are formed in a region of the third portion, and
an electrical wire configured to extend from the first portion of the PCB to the second portion of the PCB via the third portion of the PCB such that the electrical wire passes in-between a first number of the plurality of holes; and
a conductive material disposed on inner surfaces of the plurality of holes and electrically isolated from the electrical wire.

2. The foldable electronic device of claim 1, wherein a conductive ink material is provided in each hole of the plurality of holes to be in contact with the conductive material.

3. The foldable electronic device of claim 2,
wherein the conductive ink material provided in each hole of the plurality of holes has elasticity and is attached to the conductive material .

4. The foldable electronic device of claim 2,
wherein the conductive ink material and the conductive material are electrically connected to a ground of the PCB to shield a portion of the electrical wire across the third portion of the PCB through the ground of the PCB.

5. The foldable electronic device of claim 1, further comprising:
a first terminal, disposed at the first portion of the PCB, connected to the electrical wire; and
a second terminal, disposed at the second portion of the PCB, connected to the electrical wire,
wherein the first terminal and the second terminal are electrically connected to each other through the electrical wire.

6. The foldable electronic device of claim 1, further comprising a shielding film, attached on the third portion to shield the electrical wire.

7. The foldable electronic device of claim 6, further comprising a protection film, attached on the shielding film,
wherein the shielding film and the protection film have elasticity.

8. The foldable electronic device of claim 1,
wherein the PCB includes another electrical wire configured to extend from the first portion of the PCB to the second portion of the PCB via the third portion of the PCB, and
wherein the other electrical wire is provided between a second number of the plurality of holes, and
wherein a portion of the other electrical wire is disposed adjacent to a portion of the electrical wire .

9. The foldable electronic device of claim 8,
wherein the PCB includes a plurality of conductive vias, at least partially penetrating the PCB, disposed between the portion of the electrical wire and the portion of the other electrical wire.

10. The foldable electronic device of claim 1,
wherein the PCB further includes insulation layers, and
wherein the electrical wire is interposed between the insulation layers.

11. The foldable electronic device of claim 10,
wherein the insulation layers are formed from graphite.

12. The foldable electronic device of claim 1,
wherein the plurality of holes include:
a first hole, and
a second hole disposed adjacent to the first hole,
wherein a first distance between the first hole and a section of the electrical wire disposed between the first hole and the second hole corresponds to a distance between the second hole and the section of the electrical wire.

13. The foldable electronic device of claim 1,
wherein the third portion of the PCB further includes a another region, different to the region, configured to support the third display portion.

14. The foldable electronic device of claim 1, further comprising:
a foldable housing including a first housing part coupled to the first display portion and a second housing part coupled to the second display portion; and
a hinge assembly configured to rotatably couple the first housing part and the second housing part and to deform the third display portion.

15. The foldable electronic device of claim 1, further comprising wireless communication circuitry,
wherein the electrical wire is used to transmit and/or receive signals from the wireless communication circuitry to an external electronic device.
